(19) Europäisches Patentamt
European Patent Office
Office européen des brevets

(11) **EP 4 674 940 A1**

(12) **EUROPEAN PATENT APPLICATION**
published in accordance with Art. 153(4) EPC

(43) Date of publication:
**07.01.2026 Bulletin 2026/02**

(21) Application number: **24763822.4**

(22) Date of filing: **26.02.2024**

(51) International Patent Classification (IPC):
***C12J 1/04*** (2006.01)

(52) Cooperative Patent Classification (CPC):
**C12J 1/04**

(86) International application number:
**PCT/JP2024/006743**

(87) International publication number:
**WO 2024/181342 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.02.2023 JP 2023030392**

(71) Applicant: **Mizkan Holdings Co., Ltd.
Handa-shi, Aichi 475-8585 (JP)**

(72) Inventors:
• **TANAKA Hiroyuki
Handa-shi, Aichi 475-8585 (JP)**
• **SAKAI Fumie
Handa-shi, Aichi 475-8585 (JP)**
• **OYAGI Ayako
Handa-shi, Aichi 475-8585 (JP)**

(74) Representative: **Hasegawa, Kan
Patentanwaltskanzlei Hasegawa
Untere Hauptstraße 56
85354 Freising (DE)**

(54) **METHOD FOR PRODUCING VINEGAR**

(57) Provided is a method for producing vinegar in which fermentation is easily controlled in production of the vinegar and the occurrence of a stuffy odor is suppressed.

A method for producing vinegar includes a fermentation step using acetic acid-producing bacteria, in which all of the following fermentation conditions (a) to (c) are satisfied.

(a) A rate of increase in absorbance (660 nm) of the fermentation liquid from a time point at which a ratio of Brix to the total value of an acidity and an alcohol concentration of the fermentation liquid changes up to 3 hours after the time point is -0.2/h or more.

(b) A rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more.

(c) When the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more.

**EP 4 674 940 A1**

**Description**

Technical Field

The present disclosure relates to a method for producing vinegar.

Background Art

Conventionally, as a method for producing vinegar, there are known a static fermentation method (surface fermentation method) in which a fermentation nutrient source is fermented by acetic acid-producing bacteria proliferated on its surface, and a submerged fermentation method in which air (oxygen) is supplied throughout the entire fermentation liquid by aeration of the air (oxygen) and by reducing the size of air bubbles by stirring or the like, thereby performing fermentation (see, for example, Patent Literature 1).

However, the static fermentation method usually has a significantly long fermentation period of about one week to several months, and requires an operation of spreading a bacterial film of acetic acid-producing bacteria on the surface of the fermentation nutrient source, which takes time and effort, resulting in low production efficiency.

On the other hand, the submerged fermentation method has advantages in that acetic acid fermentation can be carried out in a shorter time and at a lower production cost compared to the static fermentation method, but has a problem that a stuffy odor is generated in the vinegar.

Citation List

Patent Literature

Patent Literature 1: JP 4-59874 A

Summary of Invention

Technical Problem

Accordingly, an object of the present disclosure is to provide a method for producing vinegar in which fermentation is easily controlled in production of the vinegar and the occurrence of a stuffy odor is suppressed.

Solution to Problem

In order to solve the above problems, the present inventors conducted extensive studies and found that, by adjusting a rate of increase in absorbance (660 nm) of a fermentation liquid, from a time point at which a ratio of Brix to the total value of an acidity and an alcohol concentration of the fermentation liquid changes up to 3 hours after the time point, a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point, and an average alcohol concentration of the fermentation liquid in a fermentation step defined as a period from a time point at which the ratio of Brix to the total value of the acidity and the alcohol concentration of the fermentation liquid changes to a time point at which aeration and/or stirring is continuously stopped for 15 minutes, to a predetermined level, vinegar in which fermentation is easily managed and the occurrence of a stuffy odor is suppressed can be obtained.

That is, the present disclosure relates to the following.

(1) A method for producing vinegar, the method including a fermentation step using acetic acid-producing bacteria, in which all of the following fermentation conditions (a) to (c) are satisfied.

(a) A rate of increase in absorbance (660 nm) of a fermentation liquid from a time point at which a ratio of Brix to the total value of an acidity and an alcohol concentration of the fermentation liquid changes up to 3 hours after the time point is -0.2/h or more, -0.18/h or more, - 0.16/h or more, -0.15/h or more, -0.14/h or more, -0.12/h or more, -0.1/h or more, -0.08/h or more, -0.07/h or more, -0.06/h or more, -0.05/h or more, -0.04/h or more, -0.03/h or more, -0.025/h or more, -0.023/h or more, -0.02/h or more, -0.018/h or more, or -0.015/h or more, an upper limit value thereof is not particularly limited, but is, for example, 0.1/h or less, 0.08/h or less, 0.05/h or less, 0.03/h or less, 0.01/h or less, 0.005/h or less, 0.001/h or less, 0.0/h or less, or -0.005/h or less, and the range is, for example, from -0.2/h to 0.1/h, from -0.15/h to 0.01/h, from -0.1/h to 0.0/h, or from -0.05/h to -0.005/h.

(b) A rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, -0.15/h or more, -0.1/h or more, - 0.05/h or more, -0.01/h or more, -0.005/h or more, -0.001/h or more, -0.0005/h or more, -0.0001/h or more, 0/h or more, 0.0001/h or more, 0.0005/h or more, 0.001/h or more, 0.005/h or more, 0.01/h or more, 0.015/h or more, 0.02/h or more, 0.025/h or more, or 0.03/h or more, an upper limit value thereof is not particularly limited, but is, for example, 0.3/h or less, 0.25/h or less, 0.2/h or less, 0.15/h or less, 0.1/h or less, 0.095/h or less, 0.09/h or less, 0.085/h or less, 0.08/h or less, 0.07/h or less, 0.06/h or less, or 0.05/h or less, and the range is, for example, from -0.2/h to 0.3/h, from -0.1/h to 0.2/h, from -0.05/h to 0.1/h, or from 0/h to 0.08/h.

(c) When the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more, 0.22 v/v% or more, 0.24 v/v% or more, 0.26 v/v% or more, 0.28 v/v% or more, 0.30 v/v% or more, 0.32 v/v% or more, 0.35 v/v% or more, 0.38 v/v% or more, 0.4 v/v% or more, 0.42 v/v% or more, 0.45 v/v% or more, 0.48 v/v% or more, 0.5 v/v% or more, 0.52 v/v% or more, 0.55 v/v% or more, 0.6 v/v% or more, 0.65 v/v% or more, 0.7 v/v% or more, 0.75 v/v% or more, 0.8 v/v% or more, 0.85 v/v% or more, or 0.9 v/v% or more, an upper limit value thereof is not particularly limited, but is, for example, 3.0 v/v% or less, 2.8 v/v% or less, 2.5 v/v% or less, 2.3 v/v% or less, 2.0 v/v% or less, 1.8 v/v% or less, 1.7 v/v% or less, 1.6 v/v% or less, 1.5 v/v% or less, 1.4 v/v% or less, 1.3 v/v% or less, 1.2 v/v% or less, or 1.0 v/v% or less, and the range is, for example, from 0.2 v/v% to 3.0 v/v%, from 0.3 v/v% to 2.5 v/v%, from 0.4 v/v% to 2.0 v/v%, or from 0.5 v/v% to 1.5 v/v%.

(2) The method for producing vinegar according to the above (1), in which in the fermentation step after 50% of a fermentation time in the entire fermentation step has elapsed, a time during which the ratio of the alcohol concentration to the total value of the acidity and the alcohol concentration of the fermentation liquid is 0.04 or less is within 5 hours, 4.5 hours, 4.0 hours, 3.5 hours, 3.0 hours, 2.5 hours, or 2.0 hours, a lower limit value thereof is not particularly limited, but is, for example, 0 hours or longer, 0.2 hours or longer, 0.4 hours or longer, 0.6 hours or longer, 0.8 hours or longer, or 1.0 hour or longer, and the range is, for example, from 0.2 hours to 4 hours, from 0.6 hours to 3 hours, or from 1.0 hour to 2.5 hours.

(3) The method for producing vinegar according to the above (1) or (2), in which in the fermentation step after 50% of a fermentation time in the entire fermentation step has elapsed, a time during which the ratio of the alcohol concentration to the total value of the acidity and the alcohol concentration of the fermentation liquid is 0.04 or less and the alcohol concentration of the fermentation liquid is less than 0.2 v/v% is within 5 hours, 4.5 hours, 4.0 hours, 3.5 hours, 3.0 hours, 2.5 hours, or 2.0 hours, a lower limit value thereof is not particularly limited, but is, for example, 0 hours or longer, 0.2 hours or longer, 0.4 hours or longer, 0.6 hours or longer, 0.8 hours or longer, or 1.0 hour or longer, and the range is, for example, from 0 hours to 5 hours, from 0.2 hours to 4 hours, from 0.6 hours to 3 hours, or from 1.0 hour to 2.5 hours.

(4) The method for producing vinegar according to any one of the above (1) to (3), including a step of increasing an aeration rate by 0.05 vvm or more, 0.07 vvm or more, 0.1 vvm or more, 0.12 vvm or more, 0.15 vvm or more, 0.18 vvm or more, 0.2 vvm or more, 0.22 vvm or more, 0.25 vvm or more, 0.27 vvm or more, 0.29 vvm or more, 0.3 vvm or more, 0.4 vvm or more, 0.5 vvm or more, 0.6 vvm or more, 0.7 vvm or more, 0.8 vvm or more, or 0.9 vvm or more as compared with the time point at which the ratio of Brix to the total value of the acidity and the alcohol concentration of the fermentation liquid changes before the time point at which the ratio of Brix to the total value of the acidity and the alcohol concentration of the fermentation liquid changes, an upper limit value thereof is not particularly limited, but is, for example, 10 vvm or less, 9.0 vvm or less, 8.0 vvm or less, 7.0 vvm or less, 6.0 vvm or less, 5.0 vvm or less, or 4.5 vvm or less, and the range is, for example, from 0.05 vvm to 10 vvm, from 0.1 vvm to 8 vvm, from 0.15 vvm to 6 vvm, or from 0.2 vvm to 4.5 vvm.

(5) The method for producing vinegar according to any one of the above (1) to (4), in which a time during which the alcohol concentration of the fermentation liquid is less than 0.2 v/v% is within 5 hours, 4.5 hours, 4 hours, 3.5 hours, 3 hours, 2.5 hours, 2 hours, or 1.5 hours in the entire fermentation step, a lower limit value thereof is not particularly limited, but is, for example, 0 hours or longer, 0.1 hours or longer, 0.2 hours or longer, 0.3 hours or longer, 0.4 hours or longer, 0.5 hours or longer, 0.7 hours or longer, or 1 hour or longer, and the range is, for example, from 0 hours to 5 hours, from 0.1 hours to 4 hours, from 0.3 hours to 3 hours, or from 0.5 hours to 2.5 hours.

(6) The method for producing vinegar according to any one of the above (1) to (5), in which a time during which the alcohol concentration of the fermentation liquid is less than 0.2 v/v% is 30% or less, 29% or less, 27% or less, 25% or less, 23% or less, 21% or less, 20% or less, 15% or less, 12% or less, 10% or less, 8% or less, 6% or less, or 5.5% or less of a fermentation time in the entire fermentation step, a lower limit value thereof is not particularly limited, but is, for example, 0% or more, 0.1% or more, 0.25% or more, 0.5% or more, 0.75% or more, 1.0% or more, or 1.2% or more, and the range is, for example, from 0% to 30%, from 0.5% to 27%, from 1.0% to 23%, or from 1.2% to 20%.

(7) The method for producing vinegar according to any one of the above (1) to (6), in which a fermentation tank for fermenting a seed vinegar fermentation liquid containing acetic acid-producing bacteria is different from a fermentation tank for performing acetic acid fermentation by adding a fermentation nutrient source suitable for the vinegar to be produced to the seed vinegar fermentation liquid.

(8) The method for producing vinegar according to any one of the above (1) to (7), in which a rate of increase in ratio of Brix to the alcohol concentration of the fermentation liquid is 100/h or less, 90/h or less, 80/h or less, 70/h or less, 60/h or less, 55/h or less, 50/h or less, 45/h or less, or 40/h or less, a lower limit value thereof is not particularly limited, but is, for example, - 50/h or more, -45/h or more, -40/h or more, -35/h or more, -30/h or more, -25/h or more, -20/h or more, or -15/h or more, and the range is, for example, from -50/h to 100/h, from -35/h to 70/h, or from -20/h to 50/h.

(9) The method for producing vinegar according to any one of the above (1) to (8), in which in the fermentation step after 50% of a fermentation time in the entire fermentation step has elapsed, a time during which a ratio of Brix to the alcohol concentration is 40 or more is within 5 hours, 2.7 hours, 2.5 hours, 2.3 hours, 2 hours, 1.8 hours, 1.6 hours, 1.4 hours, or 1.2 hours, a lower limit value thereof is not particularly limited, but is, for example, 0 hours or longer, 0.1 hours or longer, 0.2 hours or longer, 0.3 hours or longer, 0.4 hours or longer, or 0.5 hours or longer, and the range is, for example, from 0 hours to 5 hours, from 0 hours to 3 hours, or from 0 hours to 1.2 hours.

(10) The method for producing vinegar according to any one of the above (1) to (9), in which a time from the time point at which the ratio of Brix to the total value of the acidity and the alcohol concentration of the fermentation liquid changes to a time point at which a bacterial growth rate of the fermentation liquid becomes greater than an average bacterial growth rate in the entire fermentation step is within 80 hours, 75 hours, 70 hours, 68 hours, 67 hours, 65 hours, 63 hours, 60 hours, 58 hours, 55 hours, 54 hours, 52 hours, 50 hours, 49 hours, 48 hours, 45 hours, 40 hours, 35 hours, 30 hours, 25 hours, 20 hours, 15 hours, or 10 hours, a lower limit value thereof is not particularly limited, but is, for example, 0.1 hours or longer, 0.2 hours or longer, 0.3 hours or longer, 0.4 hours or longer, 0.5 hours or longer, 0.6 hours or longer, 0.7 hours or longer, 0.8 hours or longer, 0.9 hours or longer, 1 hour or longer, 1.2 hours or longer, 1.5 hours or longer, 1.8 hours or longer, 2.0 hours or longer, 2.5 hours or longer, or 3.0 hours or longer, and the range is, for example, from 0.1 hours to 80 hours, from 0.25 hours to 70 hours, from 0.5 hours to 60 hours, or from 1 hour to 54 hours.

(11) The method for producing vinegar according to any one of the above (1) to (10), in which in the entire fermentation step, a ratio of a time from the time point at which the ratio of Brix to the total value of the acidity and the alcohol concentration of the fermentation liquid changes to a time point at which a bacterial growth rate of the fermentation liquid becomes greater than an average bacterial growth rate in the entire fermentation step is 80% or less, 79% or less, 78% or less, 75% or less, 74% or less, 72.5% or less, 72% or less, 70% or less, 69% or less, 68% or less, 67.5% or less, 67% or less, or 66.7% or less, a lower limit value thereof is not particularly limited, but is, for example, 3% or more, 3.5% or more, 4% or more, 4.5% or more, 5% or more, 5.5% or more, 6% or more, 6.5% or more, 7% or more, 7.2% or more, 7.3% or more, 7.4% or more, or 7.5% or more, and the range is, for example, from 3% to 80%, from 4.5% to 75%, from 6% to 70%, or from 6.5% to 68%.

(12) The method for producing vinegar according to any one of the above (1) to (11), in which the alcohol is ethanol.

(13) The method for producing vinegar according to any one of the above (1) to (12), in which the acetic acid-producing bacteria are one or more acetic acid bacteria selected from the group consisting of acetic acid bacteria of the genus Acetobacter, acetic acid bacteria of the genus Gluconacetobacter, acetic acid bacteria of the genus Gluconobacter, acetic acid bacteria of the genus Komagataeibacter, acetic acid bacteria of the genus Kozakia, and acetic acid bacteria of the genus Tanticharoenia.

(14) The method for producing vinegar according to any one of the above (1) to (13), in which acetic acid-producing bacteria other than Acetobacter aceti IFO3281 strain are used as the acetic acid-producing bacteria.

(15) The method for producing vinegar according to any one of the above (1) to (14), in which the time point at which the ratio of Brix to the total value of the acidity and the alcohol concentration of the fermentation liquid changes is a time point at which addition of a fermentation nutrient source to a seed vinegar fermentation liquid is started.

(16) The method for producing vinegar according to any one of the above (1) to (15), in which an acidity of the seed vinegar fermentation liquid is 1.0 w/v% or more and 12 w/v% or less, a lower limit value thereof is, for example, 1.0 w/v% or more, 1.5 w/v% or more, 2.0 w/v% or more, 2.5 w/v% or more, 3.0 w/v% or more, 3.5 w/v% or more, 4.0 w/v% or more, 4.5 w/v% or more, 5.0 w/v% or more, 5.5 w/v% or more, or 6.0 w/v% or more, and an upper limit value thereof is, for example, 12 w/v% or less, 11 w/v% or less, 10 w/v% or less, 9.5 w/v% or less, 9.0 w/v% or less, 8.5 w/v% or less, 8.0 w/v% or less, 7.5 w/v% or less, 7.0 w/v% or less, or 6.8 w/v% or less; and an upper limit value of an alcohol concentration of the seed vinegar fermentation liquid is not particularly limited, but is, for example, 4.0 v/v% or less, 3.6 v/v% or less, 3.2 v/v% or less, 2.8 v/v% or less, 2.4 v/v% or less, 2.0 v/v% or less, 1.6 v/v% or less, or 1.2 v/v% or less, a lower limit value thereof is not particularly limited, but is, for example, 0.10 v/v% or more, 0.20 v/v% or more, 0.30 v/v% or more, 0.5 v/v% or more, or 0.7 v/v% or more, and the range is, for example, from 0.10 v/v% to 4.0 v/v%, from 0.20 v/v% to 3.0 v/v%, or from 0.30 v/v% to 2.0 v/v%.

(17) The method for producing vinegar according to the above (15) or (16), in which the seed vinegar fermentation liquid is prepared by a seed vinegar fermentation step performed by adding a fermentation nutrient source to acetic acid-producing bacteria, and performing aeration and/or stirring, and the seed vinegar fermentation step includes a step of increasing an acidity of the seed vinegar fermentation liquid to 13 w/v% or more or 15 w/v% or more, and optionally includes, after the step, a step of reducing the acidity of the seed vinegar fermentation liquid to 11 w/v% or less, 9 w/v% or less, 8 w/v% or less, or 7.5 w/v% or less.

(18) A method for producing a culture of acetic acid-producing bacteria, the method including a fermentation step using acetic acid-producing bacteria, in which all of the following fermentation conditions (a) to (c) are satisfied.

(a) A rate of increase in absorbance (660 nm) of a fermentation liquid from a time point at which a ratio of Brix to the total value of an acidity and an alcohol concentration of the fermentation liquid changes up to 3 hours after the time point is -0.2/h or more, -0.18/h or more, -0.16/h or more, -0.15/h or more, -0.14/h or more, -0.12/h or more, -0.1/h or more, -0.08/h or more, -0.07/h or more, -0.06/h or more, -0.05/h or more, -0.04/h or more, -0.03/h or more, -0.025/h or more, -0.023/h or more, -0.02/h or more, -0.018/h or more, or -0.015/h or more, an upper limit value thereof is not particularly limited, but is, for example, 0.1/h or less, 0.08/h or less, 0.05/h or less, 0.03/h or less, 0.01/h or less, 0.005/h or less, 0.001/h or less, 0.0/h or less, or -0.005/h or less, and the range is, for example, from -0.2/h to 0.1/h, from -0.15/h to 0.01/h, from -0.1/h to 0.0/h, or from -0.05/h to -0.005/h. In addition, for example, the alcohol may be ethanol.

(b) A rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, -0.15/h or more, -0.1/h or more, -0.05/h or more, -0.01/h or more, -0.005/h or more, -0.001/h or more, -0.0005/h or more, -0.0001/h or more, 0/h or more, 0.0001/h or more, 0.0005/h or more, 0.001/h or more, 0.005/h or more, 0.01/h or more, 0.015/h or more, 0.02/h or more, 0.025/h or more, or 0.03/h or more, an upper limit value thereof is not particularly limited, but is, for example, 0.3/h or less, 0.25/h or less, 0.2/h or less, 0.15/h or less, 0.1/h or less, 0.095/h or less, 0.09/h or less, 0.085/h or less, 0.08/h or less, 0.07/h or less, 0.06/h or less, or 0.05/h or less, and the range is, for example, from -0.2/h to 0.3/h, from -0.1/h to 0.2/h, from -0.05/h to 0.1/h, or from 0/h to 0.08/h. In addition, for example, the alcohol may be ethanol.

(c) When the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more, 0.22 v/v% or more, 0.24 v/v% or more, 0.26 v/v% or more, 0.28 v/v% or more, 0.30 v/v%, 0.32 v/v% or more, 0.35 v/v% or more, 0.38 v/v% or more, 0.4 v/v% or more, 0.42 v/v% or more, 0.45 v/v% or more, 0.48 v/v% or more, 0.5 v/v% or more, 0.52 v/v% or more, 0.55 v/v%, 0.6 v/v% or more, 0.65 v/v% or more, 0.7 v/v% or more, 0.75 v/v% or more, 0.8 v/v% or more, 0.85 v/v% or more, or 0.9 v/v% or more, an upper limit value thereof is not particularly limited, but is, for example, 3.0 v/v% or less, 2.8 v/v% or less, 2.5 v/v% or less, 2.3 v/v% or less, 2.0 v/v% or less, 1.8 v/v% or less, 1.7 v/v% or less, 1.6 v/v% or less, 1.5 v/v% or less, 1.4 v/v% or less, 1.3 v/v% or less, 1.2 v/v% or less, or 1.0 v/v% or less, and the range is, for example, from 0.2 v/v% to 3.0 v/v%, from 0.3 v/v% to 2.5 v/v%, from 0.4 v/v% to 2.0 v/v%, or from 0.5 v/v% to 1.5 v/v%. In addition, for example, the alcohol may be ethanol.

(19) A method for producing an acetic acid-containing composition, the method including a fermentation step using acetic acid-producing bacteria, in which all of the following fermentation conditions (a) to (c) are satisfied.

(a) A rate of increase in absorbance (660 nm) of a fermentation liquid from a time point at which a ratio of Brix to the total value of an acidity and an alcohol concentration of the fermentation liquid changes up to 3 hours after the time point is -0.2/h or more, -0.18/h or more, -0.16/h or more, -0.15/h or more, -0.14/h or more, -0.12/h or more, -0.1/h or more, -0.08/h or more, -0.07/h or more, -0.06/h or more, -0.05/h or more, -0.04/h or more, -0.03/h or more, -0.025/h or more, -0.023/h or more, -0.02/h or more, -0.018/h or more, or -0.015 or more, an upper limit value thereof is not particularly limited, but is, for example, 0.1/h or less, 0.08/h or less, 0.05/h or less, 0.03/h or less, 0.01/h or less, 0.005/h or less, 0.001/h or less, 0.0/h or less, or -0.005 or less, and the range is, for example, from -0.2/h to 0.1/h, from -0.15/h to 0.01/h, from -0.1/h to 0.0/h, or from -0.05/h to -0.005/h. In addition, for example, the alcohol may be ethanol.

(b) A rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, -0.15/h or more, -0.1/h or more, -0.05/h or more, -0.01/h or more, -0.005/h or more, -0.001/h or more, -0.0005/h or more, -0.0001/h or more, 0/h or more, 0.0001/h or more, 0.0005/h or more, 0.001/h or more, 0.005/h or more, 0.01/h or more, 0.015/h or more, 0.02/h or more, 0.025/h or more, or 0.03/h or more, an upper limit value thereof is not particularly limited, but is, for example, 0.3/h or less, 0.25/h or less, 0.2/h or less, 0.15/h or less, 0.1/h or less, 0.095/h or less, 0.09/h or less, 0.085/h or less, 0.08/h or less, 0.07/h or less, 0.06/h or less, or 0.05/h or less, and the range is, for example, from -0.2/h to 0.3/h, from -0.1/h to 0.2/h, from -0.05/h to 0.1/h, or from 0/h to 0.08/h. In addition, for example, the alcohol may be ethanol.

(c) When the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more, 0.22 v/v% or more, 0.24 v/v% or more, 0.26 v/v% or more, 0.28 v/v% or more, 0.30 v/v%, 0.32 v/v% or more, 0.35 v/v% or more, 0.38 v/v% or more, 0.4 v/v% or more, 0.42 v/v% or more, 0.45 v/v% or more, 0.48 v/v% or more, 0.5 v/v% or more, 0.52 v/v% or more, 0.55 v/v%, 0.6 v/v% or more, 0.65 v/v% or more, 0.7 v/v% or more, 0.75 v/v% or more, 0.8 v/v% or more, 0.85 v/v% or more, or 0.9 v/v% or more, an upper limit value thereof is not particularly limited, but is, for example, 3.0 v/v% or less, 2.8 v/v% or less, 2.5 v/v% or less, 2.3 v/v% or less, 2.0 v/v% or less, 1.8 v/v% or less, 1.7 v/v% or less, 1.6 v/v% or less, 1.5 v/v% or less, 1.4 v/v% or less, 1.3 v/v% or less, 1.2 v/v% or less, or 1.0 v/v% or less, and the range is, for example, from 0.2 v/v% to 3.0 v/v%, from 0.3 v/v% to 2.5 v/v%, from 0.4 v/v% to 2.0 v/v%, or from 0.5 v/v% to 1.5 v/v%. In addition, for example, the alcohol may be ethanol.

(20) A method for producing vinegar by performing fermentation while performing aeration and/or stirring, the method including at least the following steps:

(Step D) a step of preparing a seed vinegar fermentation liquid;

(Step E) a step of starting a fermentation step by starting addition of a fermentation nutrient source to the seed vinegar fermentation liquid to change a ratio of Brix to the total value of an acidity and an alcohol concentration of the fermentation liquid;

(Step F) a step of performing acetic acid fermentation by aeration and/or stirring until the acidity of the fermentation liquid reaches a predetermined value; and

(Step G) a step of terminating the fermentation by continuously stopping the aeration and/or stirring for 15 minutes or longer at a stage where the acidity of the fermentation liquid becomes equal to or greater than a predetermined value,

in which from the step E to the step F, a rate of increase in absorbance (660 nm) of the fermentation liquid from a time point at which a ratio of Brix to the total value of an acidity and an alcohol concentration of the fermentation liquid changes up to 3 hours after the time point is - 0.2/h or more, -0.18/h or more, -0.16/h or more, -0.15/h or more, -0.14/h or more, -0.12/h or more, -0.1/h or more, -0.08/h or more, -0.07/h or more, -0.06/h or more, -0.05/h or more, -0.04/h or more, -0.03/h or more, -0.025/h or more, -0.023/h or more, -0.02/h or more, -0.018/h or more, or -0.015/h or more, an upper limit value thereof is not particularly limited, but is, for example, 0.1/h or less, 0.08/h or less, 0.05/h or less, 0.03/h or less, 0.01/h or less, 0.005/h or less, 0.001/h or less, 0.0/h or less, or -0.005 or less, and the range is, for example, from -0.2/h to 0.1/h, from -0.15/h to 0.01/h, from -0.1/h to 0.0/h, or from -0.05/h to -0.005/h, from the step E to the step F, a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, -0.15/h or more, -0.1/h or more, -0.05/h or more, -0.01/h or more, -0.005/h or more, -0.001/h or more, -0.0005/h or more, -0.0001/h or more, 0/h or more, 0.0001/h or more, 0.0005/h or more, 0.001/h or more, 0.005/h or more, 0.01/h or more, 0.015/h or more, 0.02/h or more, 0.025/h or more, or 0.03/h or more, an upper limit value thereof is not particularly limited, but is, for example, 0.3/h or less, 0.25/h or less, 0.2/h or less, 0.15/h or less, 0.1/h or less, 0.095/h or less, 0.09/h or less, 0.085/h or less, 0.08/h or less, 0.07/h or less, 0.06/h or less, or 0.05/h or less, and the range is, for example, from -0.2/h to 0.3/h, from -0.1/h to 0.2/h, from -0.05/h to 0.1/h, or from 0/h to 0.08/h, and when the fermentation step is defined as a period from a time point at which the ratio of Brix to the total value of the acidity and the alcohol concentration of the fermentation liquid changes in the step E to a time point at which aeration and/or stirring is continuously stopped for 15 minutes in the step G, an average alcohol concentration of the fermentation liquid is 0.2 v/v% or more, 0.22 v/v% or more, 0.24 v/v% or more, 0.26 v/v% or more, 0.28 v/v% or more, 0.30 v/v%, 0.32 v/v% or more, 0.35 v/v% or more, 0.38 v/v% or more, 0.4 v/v% or more, 0.42 v/v% or more, 0.45 v/v% or more, 0.48 v/v% or more, 0.5 v/v% or more, 0.52 v/v% or more, 0.55 v/v% or more, 0.6 v/v% or more, 0.65 v/v% or more, 0.7 v/v% or more, 0.75 v/v% or more, 0.8 v/v% or more, 0.85 v/v% or more, or 0.9 v/v% or more, an upper limit value thereof is not particularly limited, but is, for example, 3.0 v/v% or less, 2.8 v/v% or less, 2.5 v/v% or less, 2.3 v/v% or less, 2.0 v/v% or less, 1.8 v/v% or less, 1.7 v/v% or less, 1.6 v/v% or less, 1.5 v/v% or less, 1.4 v/v% or less, 1.3 v/v% or less, 1.2 v/v% or less, or 1.0 v/v% or less, and the range is, for example, from 0.2 v/v% to 3.0 v/v%, from 0.3 v/v% to 2.5 v/v%, from 0.4 v/v% to 2.0 v/v%, or from 0.5 v/v% to 1.5 v/v%. In addition, for example, the alcohol may be ethanol.

(21) A method for producing a beverage or a seasoning, the method including a step of blending vinegar produced by the method according to any one of the above (1) to (20).

(22) A method for suppressing a stuffy odor of vinegar, the method including a fermentation step using acetic acid-producing bacteria, in which fermentation is performed so that all of the following fermentation conditions (a) to (c) are satisfied.

(a) A rate of increase in absorbance (660 nm) of a fermentation liquid from a time point at which a ratio of Brix to the total value of an acidity and an alcohol concentration of the fermentation liquid changes up to 3 hours after the time point is -0.2/h or more, -0.18/h or more, - 0.16/h or more, -0.15/h or more, -0.14/h or more, -0.12/h or more, -0.1/h or more, -0.08/h or more, -0.07/h or more, -0.06/h or more, -0.05/h or more, -0.04/h or more, -0.03/h or more, -0.025/h or more, -0.023/h or more, -0.02/h or more, -0.018/h or more, or -0.015 or more, an upper limit value thereof is not particularly limited, but is, for example, 0.1/h or less, 0.08/h or less, 0.05/h or less, 0.03/h or less, 0.01/h or less, 0.005/h or less, 0.001/h or less, 0.0/h or less, or -0.005 or less, and the range is, for example, from -0.2/h to 0.1/h, from -0.15/h to 0.01/h, from -0.1/h to 0.0/h, or from -0.05/h to -0.005/h. In addition, for example, the alcohol may be ethanol.

(b) A rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, -0.15/h or more, -0.1/h or more, - 0.05/h or more, -0.01/h or more, -0.005/h or more, -0.001/h or more, -0.0005/h or more, -0.0001/h or more, 0/h or more, 0.0001/h or more, 0.0005/h or more, 0.001/h or more, 0.005/h or more, 0.01/h or more, 0.015/h or more, 0.02/h or more, 0.025/h or more, or 0.03/h or more, an upper limit value thereof is not particularly limited, but is, for example, 0.3/h or less, 0.25/h or less, 0.2/h or less, 0.15/h or less, 0.1/h or less, 0.095/h or less, 0.09/h or less, 0.085/h or less, 0.08/h or less, 0.07/h or less, 0.06/h or less, or 0.05/h or less, and the range is, for example, from -0.2/h to 0.3/h, from -0.1/h to 0.2/h, from -0.05/h to 0.1/h, or from 0/h to 0.08/h. In addition, for example, the alcohol may be ethanol.

(c) When the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more, 0.22 v/v% or more, 0.24 v/v% or more, 0.26 v/v% or more, 0.28 v/v% or more, 0.30 v/v%, 0.32 v/v% or more, 0.35 v/v% or more, 0.38 v/v% or more, 0.4 v/v% or more, 0.42 v/v% or more, 0.45 v/v% or more, 0.48 v/v% or more, 0.5 v/v% or more, 0.52 v/v% or more, 0.55 v/v%, 0.6 v/v% or more, 0.65 v/v% or more, 0.7 v/v% or more, 0.75 v/v% or more, 0.8 v/v% or more, 0.85 v/v% or more, or 0.9 v/v% or more, an upper limit value thereof is not particularly limited, but is, for example, 3.0 v/v% or less, 2.8 v/v% or less, 2.5 v/v% or less, 2.3 v/v% or less, 2.0 v/v% or less, 1.8 v/v% or less, 1.7 v/v% or less, 1.6 v/v% or less, 1.5 v/v% or less, 1.4 v/v% or less, 1.3 v/v% or less, 1.2 v/v% or less, or 1.0 v/v% or less, and the range is, for example, from 0.2 v/v% to 3.0 v/v%, from 0.3 v/v% to 2.5 v/v%, from 0.4 v/v% to 2.0 v/v%, or from 0.5 v/v% to 1.5 v/v%. In addition, for example, the alcohol may be ethanol.

(23) A method for controlling a ratio of a time from a time point at which a ratio of Brix to a total value of an acidity and an alcohol concentration of a fermentation liquid changes to a time point at which a bacterial growth rate of the fermentation liquid becomes greater than an average bacterial growth rate in the entire fermentation step to 80% or less, 79% or less, 78% or less, 75% or less, 74% or less, 72.5% or less, 72% or less, 70% or less, 69% or less, 68% or less, 67.5% or less, 67% or less, or 66.7% or less in the entire fermentation step in vinegar production, a lower limit value thereof is not particularly limited, but is, for example, 3% or more, 3.5% or more, 4% or more, 4.5% or more, 5% or more, 5.5% or more, 6% or more, 6.5% or more, 7% or more, 7.2% or more, 7.3% or more, 7.4% or more, or 7.5% or more, and the range is, for example, from 3% to 80%, from 4.5% to 75%, from 6% to 70%, or from 6.5% to 68%, the method comprising a fermentation step using acetic acid-producing bacteria, wherein fermentation is performed so that all of the following fermentation conditions (a) to (c) are satisfied.

(a) A rate of increase in absorbance (660 nm) of a fermentation liquid from a time point at which a ratio of Brix to the total value of an acidity and an alcohol concentration of the fermentation liquid changes up to 3 hours after the time point is -0.2/h or more, -0.18/h or more, - 0.16/h or more, -0.15/h or more, -0.14/h or more, -0.12/h or more, -0.1/h or more, -0.08/h or more, -0.07/h or more, -0.06/h or more, -0.05/h or more, -0.04/h or more, -0.03/h or more, -0.025/h or more, -0.023/h or more, -0.02/h or more, -0.018/h or more, or -0.015 or more, an upper limit value thereof is not particularly limited, but is, for example, 0.1/h or less, 0.08/h or less, 0.05/h or less, 0.03/h or less, 0.01/h or less, 0.005/h or less, 0.001/h or less, 0.0/h or less, or -0.005 or less, and the range is, for example, from -0.2/h to 0.1/h, from -0.15/h to 0.01/h, from -0.1/h to 0.0/h, or from -0.05/h to -0.005/h. In addition, for example, the alcohol may be ethanol.

(b) A rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, -0.15/h or more, -0.1/h or more, - 0.05/h or more, -0.01/h or more, -0.005/h or more, -0.001/h or more, -0.0005/h or more, -0.0001/h or more, 0/h or more, 0.0001/h or more, 0.0005/h or more, 0.001/h or more, 0.005/h or more, 0.01/h or more, 0.015/h or more, 0.02/h or more, 0.025/h or more, or 0.03/h or more, an upper limit value thereof is not particularly limited, but is, for example, 0.3/h or less, 0.25/h or less, 0.2/h or less, 0.15/h or less, 0.1/h or less, 0.095/h or less, 0.09/h or less, 0.085/h or less, 0.08/h or less, 0.07/h or less, 0.06/h or less, or 0.05/h or less, and the range is, for example, from -0.2/h to 0.3/h, from -0.1/h to 0.2/h, from -0.05/h to 0.1/h, or from 0/h to 0.08/h. In addition, for example, the alcohol may be ethanol.

(c) When the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more, 0.22 v/v% or more, 0.24 v/v% or more, 0.26 v/v% or more, 0.28 v/v% or more, 0.30 v/v%, 0.32 v/v% or more, 0.35 v/v% or more, 0.38 v/v% or more, 0.4 v/v% or more, 0.42 v/v% or more, 0.45 v/v% or more, 0.48 v/v% or more, 0.5 v/v% or more, 0.52 v/v% or more, 0.55 v/v%, 0.6 v/v% or more, 0.65 v/v% or more, 0.7 v/v% or more, 0.75 v/v% or more, 0.8 v/v% or more, 0.85 v/v% or more, or 0.9 v/v% or more, an upper limit value thereof is not particularly limited, but is, for example, 3.0 v/v% or less, 2.8 v/v% or less, 2.5 v/v% or less, 2.3 v/v% or less, 2.0 v/v% or less, 1.8 v/v% or less, 1.7 v/v% or less, 1.6 v/v% or less, 1.5 v/v% or less, 1.4 v/v% or less, 1.3 v/v% or less, 1.2 v/v% or less, or 1.0 v/v% or less, and the range is, for example, from 0.2 v/v% to 3.0 v/v%, from 0.3 v/v% to 2.5 v/v%, from 0.4 v/v% to 2.0 v/v%, or from 0.5 v/v% to 1.5 v/v%. In addition, for example, the alcohol may be ethanol.

Advantageous Effects of Invention

According to the present disclosure, it is possible to provide a method for producing vinegar in which fermentation is easily controlled and the occurrence of a stuffy odor is suppressed.

Description of Embodiments

Hereinafter, details of a method for producing vinegar of the present embodiment will be described. Note that, in the present specification, when a plurality of upper limit values and/or a plurality of lower limit values are presented for the definition of a numerical range, a numerical range defined by combining at least the maximum value among the upper limit values and the minimum value among the lower limit values is to be construed as explicitly described, even if not particularly specified. Furthermore, all numerical ranges obtained by combining any one of the upper limit values with any one of the lower limit values are included in one embodiment of the present disclosure. In addition, in the present specification, a numerical range expressed using "to" means a numerical range including numerical values before and after "to" as a lower limit value and an upper limit value, respectively. When a plurality of lower limit values and a plurality of upper limit values are presented separately, any combination of a lower limit value and an upper limit value may be selected and connected by "to". Note that, in the present specification, ranges obtained by arbitrarily replacing the upper limit and lower limit of the above range and ranges obtained by arbitrarily combining the above ranges are also disclosed.

In the present specification, the terms "containing" and "comprising" encompass the terms "consisting essentially of" and "consisting of". When the terms "containing" and "comprising" are used, the listed steps or options are not necessarily exhaustive. Except for Examples and Comparative Examples, or unless explicitly stated otherwise, all numerical values should be construed as being modified by the term "about".

In the present specification, the expression "and/or" includes both the meanings of "and" and "or". For example, "A and/or B" includes both the meanings of A and B and A or B, and indicates three cases: A alone, B alone, and both A and B.

"v/v%" is synonymous with volume percent concentration at 20°C, and refers to the concentration expressed in percent (%) as the volume Vs (mL) of solute contained in a solution with a total volume V (mL).

$$\text{v/v\%} = \text{Vs}/\text{V} \times 100$$

In addition, "w/v%" is synonymous with mass-to-volume ratio concentration at 20°C, and refers to the concentration expressed as a percentage (%) of the mass W (g) of solute contained in a solution having a volume V (mL).

$$\text{w/v\%} = \text{W(g)}/\text{V(mL)} \times 100$$

In the present specification, "in terms of wet mass (wet base)" (may also be simply referred to as "wet mass basis") represents a content ratio of a target component in a sample, which is calculated with the wet mass including moisture of the sample as the denominator and the content mass of the target component in the sample as the numerator. In addition, in the ratio definition in the present specification, unless otherwise specified, it represents a ratio "in terms of wet mass".

<First Embodiment: Method for Producing Vinegar>

Hereinafter, an embodiment of the present disclosure will be described in detail.

A method for producing vinegar according to the present embodiment includes a fermentation step using acetic acid-producing bacteria, in which all of the following fermentation conditions (a) to (c) are satisfied.

(a) A rate of increase in absorbance (660 nm) of the fermentation liquid from a time point at which a ratio of Brix to the total value of an acidity and an alcohol (ethanol) concentration of the fermentation liquid changes up to 3 hours after the time point is -0.2/h or more (b) A rate of increase in ratio of the alcohol (ethanol) concentration to the total value of the acidity and the alcohol (ethanol) concentration of the fermentation liquid from a time point at which the ratio of Brix to the total value of the acidity and the alcohol (ethanol) concentration of the fermentation liquid changes up to 3 hours after the time point is -0.2/h or more

(c) When the fermentation step is defined as a period from a time point at which the ratio of Brix to the total value of the acidity and the alcohol (ethanol) concentration of the fermentation liquid changes to a time point at which aeration and/or stirring is continuously stopped for 15 minutes, an average alcohol (ethanol) concentration of the fermentation liquid in the entire fermentation step is 0.2 v/v% or more.

Note that, in the present disclosure, the term "vinegar" generally refers to a product that satisfies the definition of vinegar as defined in the Quality Labeling Standard for Vinegar (last revised by the Ministry of Agriculture, Forestry and Fisheries Notification No. 1507 dated October 16, 2008).

In addition, the method for producing vinegar may further include a seed vinegar production step and a final fermentation step in addition to the fermentation step. Note that the final fermentation step may be performed separately from the fermentation step, and may be performed after the fermentation step. In addition, the final fermentation step may be included in the fermentation step and performed during the fermentation step, as long as the fermentation conditions (a) to (c) may be satisfied in the process of the fermentation step. Note that details of the seed vinegar production step and the final fermentation step will be described below.

The "fermentation step" in the present embodiment is a step in which acetic acid-producing bacteria oxidize alcohol (ethanol) into acetic acid to produce vinegar by adding a fermentation nutrient source to a seed vinegar fermentation liquid (also referred to as "inoculum liquid") and performing aeration and/or stirring. The seed vinegar fermentation liquid is produced by a "seed vinegar production step" described below.

The "seed vinegar fermentation liquid" is a fermentation liquid containing acetic acid-producing bacteria (acetic acid bacteria) and a fermentation nutrient source, and corresponds to the fermentation liquid at the start of fermentation in the "fermentation step" of the present embodiment. According to an aspect of the present disclosure, a range of an acidity of the seed vinegar fermentation liquid of the present disclosure may be, for example, from 1.0 w/v% to 12 w/v%, and a lower limit value thereof can be, for example, 1.0 w/v% or more, 1.5 w/v% or more, 2.0 w/v% or more, 2.5 w/v% or more, 3.0 w/v% or more, 3.5 w/v% or more, 4.0 w/v% or more, 4.5 w/v% or more, 5.0 w/v% or more, 5.5 w/v% or more, or 6.0 w/v% or more. When the acidity of the seed vinegar fermentation liquid is equal to or greater than a predetermined value, an environment in which acetic acid-producing bacteria are dominant can be formed, and as a result, contamination of bacteria other than acetic acid-producing bacteria can be prevented, fermentation efficiency can be improved, and improvement in quality of a fermentation product can also be expected. On the other hand, an upper limit value of the acidity of the seed vinegar fermentation liquid of the present disclosure can be, for example, 12 w/v% or less, 11 w/v% or less, 10 w/v% or less, 9.5 w/v% or less, 9.0 w/v% or less, 8.5 w/v% or less, 8.0 w/v% or less, 7.5 w/v% or less, 7.0 w/v% or less, or 6.8 w/v% or less. When the acidity of the seed vinegar fermentation liquid is equal to or less than the predetermined value, the production of acetic acid by the acetic acid-producing bacteria can be rapidly advanced. According to an aspect of the present disclosure, an alcohol (ethanol) concentration of the seed vinegar fermentation liquid of the present disclosure can be, for example, in a range of 0.10 v/v% to 4.0 v/v%, preferably in a range of 0.20 v/v% to 3.0 v/v%, and more preferably 0.30 v/v% to 2.0 v/v%. More specifically, an upper limit of the alcohol concentration is 4.0 v/v% or less, and can be 3.6 v/v% or less, 3.2 v/v% or less, 2.8 v/v% or less, 2.4 v/v% or less, 2.0 v/v% or less, 1.6 v/v% or less, or 1.2 v/v% or less, and on the other hand, a lower limit of the alcohol concentration is not particularly limited, but can be 0.10 v/v% or more, 0.20 v/v% or more, 0.30 v/v% or more, 0.5 v/v% or more, or 0.7 v/v% or more.

The seed vinegar fermentation liquid is prepared by adding a fermentation nutrient source to acetic acid-producing bacteria, and performing aeration and/or stirring, and this step corresponds to the "seed vinegar fermentation step"; however, according to an aspect of the present disclosure, the seed vinegar fermentation step may be fermentation in which the ratio of Brix to the total value of the acidity and the alcohol (ethanol) concentration of the fermentation liquid does not change. In addition, according to an aspect of the present disclosure, the seed vinegar fermentation step may be fermentation in which the total value of the alcohol (ethanol) concentration and the acidity in the fermentation liquid does not change. Furthermore, according to an aspect of the present disclosure, the seed vinegar fermentation step may be fermentation in which the acidity and/or alcohol (ethanol) concentration of the fermentation liquid does not change.

The seed vinegar fermentation liquid contains acetic acid-producing bacteria, but may or may not produce acetic acid. Even in a case where any seed vinegar fermentation liquid is used, when the above-described fermentation conditions (a) to (c) are satisfied in the "fermentation step" of the present embodiment, it is possible to obtain vinegar in which fermentation is easily controlled and occurrence of a stuffy odor is suppressed. Note that, according to an aspect of the present disclosure, in the seed vinegar fermentation step of the present disclosure, the seed vinegar fermentation liquid is prepared by a seed vinegar fermentation step performed by adding a fermentation nutrient source to acetic acid-producing bacteria, and performing aeration and/or stirring, and the seed vinegar fermentation step may include a step of increasing an acidity of the seed vinegar fermentation liquid to 13 w/v% or more, preferably 15 w/v% or more. Thus, it is possible to maintain a fermentation environment in which acid-tolerant bacteria occupy the niche, and as a result, vinegar with a reduced stuffy odor can be produced. Note that, according to an aspect of the present disclosure, the method may include a step of reducing the acidity of the seed vinegar fermentation liquid to 11 w/v% or less, 9 w/v% or less, 8 w/v% or less, or 7.5 w/v% or less after performing the step of increasing the acidity so that the acidity of the seed vinegar fermentation liquid becomes 13 w/v% or more. As described above, by including the step of increasing and then decreasing the acidity of the seed vinegar fermentation liquid, it is possible to produce vinegar with a reduced stuffy odor.

In the present embodiment, the "fermentation step" can be a step from a time point at which the ratio of Brix to the total value of the acidity and the alcohol (ethanol) concentration of the fermentation liquid changes to a time point at which aeration and/or stirring is continuously stopped for 15 minutes. The "start of fermentation step (start of fermentation)" refers to a time point at which the ratio of Brix to the total value of acidity and alcohol concentration of the fermentation liquid changes for the first time. More specifically, the start of fermentation is, for example, a time point at which the ratio of Brix to the total value of the acidity and the alcohol concentration of the fermentation liquid changes for the first time by adding a fermentation nutrient source to the seed vinegar fermentation liquid, and in other words, it is a time point at which a fermentation nutrient source having a ratio of Brix to the total value of the acidity and the alcohol (ethanol) concentration different from the ratio of Brix to the total value of the acidity and the alcohol (ethanol) concentration of the fermentation liquid is added. Therefore, the fermentation can be started at the time when the addition of the fermentation nutrient source to the seed vinegar fermentation liquid is started. In addition, the "end of the fermentation step (end of fermentation)" refers to a time point at which aeration and/or stirring is continuously stopped for 15 minutes after the start of fermentation. Therefore, in a case where aeration and/or stirring is stopped after the start of fermentation and then aeration and/or stirring is started shorter than 15 minutes after the stoppage, or in a case where aeration and/or stirring is repeatedly stopped and started and the time from the stoppage to the start is shorter than 15 minutes, such cases are not regarded as "fermentation end" but rather as a state in which fermentation is ongoing (under fermentation), and are considered to fall within the fermentation step.

In addition, according to an aspect of the present disclosure, the "fermentation step" in the present disclosure is not limited to the above definition, and can be defined as a period from a time point at which a liquid volume of the fermentation liquid increases due to addition of a fermentation nutrient source to a time point at which aeration and/or stirring is continuously stopped for 15 minutes, from a time point at which an acidity and/or an alcohol (ethanol) concentration in the fermentation liquid increases or decreases to a time point at which aeration and/or stirring is continuously stopped for 15 minutes, or from a time point at which a ratio of an alcohol (ethanol) concentration to an acetic acid concentration in the fermentation liquid changes to a time point at which aeration and/or stirring is continuously stopped for 15 minutes.

In the "fermentation step" from the start of fermentation to the end of fermentation in the present embodiment, a ratio of a liquid volume (L) of the seed vinegar fermentation liquid to the "total amount of the liquid volume (L) of the seed vinegar fermentation liquid and the liquid volume (L) of the added fermentation nutrient source" is not particularly limited, but can be 3% or more. In addition, the ratio is preferably 5% or more, and more preferably 10% or more. On the other hand, an upper limit of the ratio is not limited, but can be 95% or less, and is preferably 90% or less, and more preferably 85% or less. These upper and lower limits can be appropriately combined, and can be set to, for example, 3% to 95%, 5% to 90%, or 10% to 85%. Within these preferable ranges, it is possible to provide a method for producing vinegar in which fermentation is more easily controlled and the occurrence of a stuffy odor is further suppressed. A range obtained by arbitrarily replacing the upper limit and the lower limit of the above range is also exemplified in the present specification. The upper limit or lower limit of the ratio can be a lower value or a higher value than the above range, and these values can be, for example, 6%, 8%, 12%, 15%, 18%, 20%, 22%, 24%, 26%, 28%, 30%, 32%, 34%, 36%, 38%, 40%, 42%, 44%, 46%, 48%, 50%, 55%, 60%, 65%, 70%, 75%, or 80%.

The "fermentation nutrient source" is a component added as a nutrient source (feed) of the acetic acid-producing bacteria, and the acetic acid-producing bacteria oxidize alcohol (ethanol), which is one of the fermentation nutrient sources, as an energy source to produce acetic acid. The "fermentation nutrient source" may contain "other components" in addition to the alcohol (ethanol). The "other components" are not particularly limited as long as they can be added to food, and examples thereof include saccharides (such as monosaccharides, disaccharides, polysaccharides, for example, glucose, fructose, sucrose, lactose, dextrose, and the like), yeast extracts (extracts obtained from yeasts such as brewer's yeast, baker's yeast, and Torula yeast), protein hydrolysates (such as peptides and peptones), amino acids, vitamins (such as fat-soluble vitamins and water-soluble vitamins), minerals, extracts or saccharified liquids of various grains such as rice, wheat, and corn, sake lees extracts, fruit juices (such as apple juice, grape juice, white grape juice, and citrus juices (such as lemon juice, yuzu juice, kabosu juice, orange juice, mikan juice, shikwasa juice, grapefruit juice, pink grapefruit juice, and hyuganatsu juice), mango juice, strawberry juice, blueberry juice, pomegranate juice, peach juice, plum juice, pineapple juice, blackcurrant juice, and raspberry juice), acetic acid (such as brewed acetic acid and synthetic acetic acid), water, and commercially available products (for example, Acetozym (FRINGS), Nutri-Go1500 (Nutrients), and the like). These fermentation nutrient sources are preferably used in appropriate combination according to the vinegar to be produced.

Note that, a fermentation nutrient source is used in both the seed vinegar production step and the fermentation step, and the types (combination, composition, and concentration of each of the above components) of the fermentation nutrient source used and added in each step may be the same or different. When the composition or concentration of the fermentation nutrient source differs between the respective steps, the effect of the method for producing vinegar of the present embodiment can be more enhanced. In addition, the number of types (combination, composition, and concentration of each of the above components) of the fermentation nutrient source added in the fermentation step may be one or two or more.

The method for adding the fermentation nutrient source to the seed vinegar fermentation liquid or the fermentation liquid in the fermentation step is not particularly limited, but one kind of fermentation nutrient source can be added, or two or more kinds of fermentation nutrient sources can be added simultaneously, separately, or alternately. For example, two kinds of fermentation nutrient sources (one containing only alcohol and water, and the other containing fruit juices, sugars, yeast extracts, minerals, and water) may be prepared, a first fermentation nutrient source may be added first, and a second fermentation nutrient source may be added during or after the addition, or the addition may be repeated. In addition, more specifically, one kind of fermentation nutrient source having a different ratio of Brix to the total value of an acidity and an alcohol concentration may be added to the seed vinegar fermentation liquid, or two or more kinds of fermentation nutrient sources each having a different ratio of Brix to the total value of the acidity and the alcohol concentration may be added to the seed vinegar fermentation liquid simultaneously or in multiple stages. In this case, the start of fermentation is a time point at which a fermentation nutrient source having a ratio of Brix to the total value of the acidity and the alcohol concentration different from the ratio of Brix to the total value of the acidity and the alcohol concentration of the seed vinegar fermentation liquid is added to the seed vinegar fermentation liquid, and the end of fermentation is a time point at which aeration and/or stirring is continuously stopped for 15 minutes.

As described above, the fermentation nutrient source added in the fermentation step may be one kind or two or more kinds, and the overall composition of the whole fermentation nutrient sources added in the fermentation step may have, for example, an acidity of 0.2 w/v% or more and 10 w/v% or less, an alcohol (ethanol) concentration of 0.1 v/v% or more and 30 v/v% or less, and Brix of 80°Bx or less.

In the present disclosure, the term "acidity" is synonymous with acetic acid concentration and refers to "acidity in terms of acetic acid". As described above, as the fermentation nutrient source, various components can be appropriately used according to the vinegar to be produced. The acetic acid contained in the fermentation nutrient source may be acetic acid derived from either brewed vinegar or synthetic vinegar, but it is preferable to use brewed vinegar from the viewpoint of improving the quality of the product.

In the present disclosure, the term "alcohol" refers to ethanol (CAS No.: 64-17-5). The alcohol (ethanol) contained in the fermentation nutrient source is not particularly limited, and may be, for example, an alcohol derived from a brewed alcohol, or may be an alcohol derived from a spirit fermentation liquid obtained by yeast fermentation of various raw materials (sugars or amino acids derived from cereals, fruit juices, or the like).

Brix (in the present disclosure, also referred to as "Brix" or "Bx") is an index value measured at 20°C by using light refraction, which indicates the concentration of soluble solids such as sugars dissolved in a liquid. The unit of Brix is "degrees". In the present embodiment, a device used for measuring Brix is not particularly limited, and, for example, a refractometer (PR-101α (manufactured by ATAGO CO., LTD.)) can be used.

The acetic acid-producing bacteria used in the present embodiment may be any ordinary acetic acid bacteria used for fermentative production of vinegar, and are not particularly limited, and examples thereof include acetic acid bacteria of the genus Acetobacter, acetic acid bacteria of the genus Gluconacetobacter, acetic acid bacteria of the genus Gluconobacter, acetic acid bacteria of the genus Komagataeibacter, acetic acid bacteria of the genus Kozakia, and acetic acid bacteria of the genus Tanticharoenia. Note that, the acetic acid-producing bacteria used for the production of the vinegar of the present embodiment may be one kind or two or more kinds. In addition, in the present embodiment, Acetobacter aceti IFO3281 strain can be suitably used as described below, but according to an aspect of the present disclosure, acetic acid-producing bacteria other than Acetobacter aceti IFO3281 strain may be used. In addition, according to an aspect of the present disclosure, acetic acid-producing bacteria other than Acetobacter altoacetigenes MH-24 (FERM BP-491) strain may be used.

Examples of the acetic acid bacteria of the genus Acetobacter include Acetobacter polyoxogenes, Acetobacter tropicalis, Acetobacter indonesiensis, Acetobacter syzygii, Acetobacter cibinongensis, Acetobacter orientalis, Acetobacter pasteurianus, Acetobacter orleanensis, Acetobacter lovaniensis, Acetobacter aceti, Acetobacter pomorum, and Acetobacter malorum. More specifically, Acetobacter aceti and Acetobacter pasteurianus are preferable, and among them, strains such as Acetobacter aceti IFO3281, Acetobacter aceti IFO3283, Acetobacter pasteurianus IFO3283, Acetobacter aceti No.1023 (FERM BP-2287), and Acetobacter pasteurianus NBRC3283 can be suitably used. These may be used alone or in combination of two or more thereof.

Examples of the acetic acid bacteria of the genus Gluconacetobacter include Gluconacetobacter swingsii, Gluconacetobacter xylinus, Gluconacetobacter diazotrophicus, Gluconacetobacter intermedius, Gluconacetobacter sacchari, Gluconacetobacter maltaceti, Gluconacetobacter kombuchae, Gluconacetobacter liquefaciens, and Gluconacetobacter europaeus. More specifically, Gluconacetobacter swingsii, Gluconacetobacter europaeus, Gluconacetobacter entanii, and Gluconacetobacter zoxylinus are preferable, and among them, strains such as Gluconacetobacter swingsii NBRC3261, Gluconacetobacter europaeus DSM6160, and Gluconacetobacter zoxylinus NBRC3288 can be suitably used. These may be used alone or in combination of two or more thereof.

Examples of the acetic acid bacteria of the genus Gluconobacter include Gluconobacter frateurii and Gluconobacter cerinus. These may be used alone or in combination of two or more thereof.

Examples of the acetic acid bacteria of the genus Komagataeibacter include Komagataeibacter xylinus, Komagataeibacter hansenii, Komagataeibacter europaeus, and Komagataeibacter oboediens. These may be used alone or in combination of two or more thereof.

Examples of the acetic acid bacteria of the genus Kozakia include Kozakia baliensis. These may be used alone or in combination of two or more thereof.

The time "from the time point at which the ratio of Brix to the total value of the acidity and the alcohol (ethanol) concentration of the fermentation liquid changes up to 3 hours after the time point" is a necessary time for the acetic acid-producing bacteria to become acclimated to the environmental change caused by the addition of the fermentation nutrient source, and to stabilize fermentation in the entire fermentation step after 3 hours, thereby facilitating fermentation control. By adjusting the addition of the fermentation nutrient source "up to 3 hours after the time point", it is possible to produce vinegar in which fermentation is easily controlled and the occurrence of a stuffy odor is suppressed.

The "rate of increase in absorbance (660 nm) of the fermentation liquid" is determined by dividing a change in the absorbance over a certain period of time by the time. Specifically, the rate of increase in the absorbance represents a change in the absorbance per hour (in the present disclosure, the time may be referred to as "hour" or simply "h"). More specifically, for example, particularly, in a period from the start of fermentation to 3 hours thereafter, when the absorbance at an arbitrary time $t1$ [h] is $at1$ and the absorbance at another arbitrary time $t2$ [h] is $at2$, the rate of increase in the absorbance can be calculated by $(at2 - at1)/(t2 - t1)$. More specifically, for example, when $t1 = 1$ [h], $t2 = 2$ [h], $at1 = 0.1$, and $at2 = 0.0$, the rate of increase in the absorbance is $(0.0 - 0.1)/(2 - 1) = -0.1/h$. Note that $t1$ is a time point within 2 hours from the start of fermentation. That is, the rate of increase in the absorbance (660 nm) of the fermentation liquid from the time point at which the ratio of Brix to the total value of the acidity and the alcohol (ethanol) concentration of the fermentation liquid changes up to 3 hours after the time point is - 0.2/h or more refers to a state in which, assuming the start of fermentation as time 0, an average of the rates of increase in the absorbance up to 3 hours after the start of fermentation does not fall below -0.2/h. More specifically, it refers to a state in which, assuming the start of fermentation as 0 hours, the average of the rates of increase in the absorbance during each of the periods from 0 hours to 1 hour, from 1 hour to 2 hours, and from 2 hours to 3 hours does not fall below -0.2/h. Note that, from the viewpoint of facilitating fermentation control, it is preferable that the rate of increase in the absorbance during each of the periods from 0 hours to 1 hour, from 1 hour to 2 hours, and from 2 hours to 3 hours does not fall below -0.2/h. The absorbance of the fermentation liquid is measured, for example, by the following measurement method. The absorbance of the fermentation liquid can be determined by measuring the absorbance (660 nm) at 20°C for each of the fermentation liquid and ultrapure water using a standard spectrophotometer (for example, UV-1800, manufactured by Shimadzu Corporation) with a square cell having an optical path length of 10 mm, and calculating a difference in absorbance between the fermentation liquid and ultrapure water (absorbance of fermentation liquid - absorbance of ultrapure water).

By setting the rate of increase in the absorbance (660 nm) to -0.2/h or more during the period from the time point at which the ratio of Brix to the total value of the acidity and the alcohol (ethanol) concentration of the fermentation liquid changes up to 3 hours after the time point, it is possible to reduce the influence of fermentation nutrient source addition on acetic acid-producing bacteria (cessation or rapid increase of acetic acid production) in the entire fermentation step, and as a result, fermentation can be more easily controlled. In addition, the time from the time point at which the ratio of Brix to the total value of the acidity and the alcohol concentration of the fermentation liquid changes to the time point at which the bacterial growth rate of the fermentation liquid becomes greater than the average bacterial growth rate of the fermentation liquid can be shortened.

The rate of increase in the absorbance (660 nm) of the fermentation liquid from a time point at which a ratio of Brix to the total value of an acidity and an alcohol (ethanol) concentration of the fermentation liquid changes up to 3 hours after the time point can be -0.2/h or more. A preferable range of the rate of increase in the absorbance is not particularly limited, but can be, for example, a range of -0.2/h to 0.1/h, preferably a range of -0.15/h to 0.01/h, more preferably a range of -0.1/h to 0.0/h, and still more preferably a range of -0.05/h to -0.005/h. By adjusting within this range, the method for producing vinegar of the present embodiment can reduce the influence on acetic acid-producing bacteria (suppression or cessation of growth of acetic acid-producing bacteria, and rapid promotion of growth of acetic acid-producing bacteria), and the fermentation time in the entire fermentation step can be stabilized, and as a result, fermentation can be more easily controlled.

More specifically, a lower limit of the rate of increase in the absorbance is -0.2/h or more, and can be -0.18/h or more, -0.16/h or more, -0.15/h or more, -0.14/h or more, -0.12/h or more, - 0.1/h or more, -0.08/h or more, -0.07/h or more, -0.06/h or more, -0.05/h or more, -0.04/h or more, -0.03/h or more, -0.025/h or more, -0.023/h or more, -0.02/h or more, -0.018/h or more, or -0.015 or more. On the other hand, an upper limit of the rate of increase in the absorbance is not particularly limited, but can be 0.1/h or less, 0.08/h or less, 0.05/h or less, 0.03/h or less, 0.01/h or less, 0.005/h or less, 0.001/h or less, 0.0/h or less, or -0.005 or less.

The "fermentation time" refers to the time during which the "fermentation step" is performed, that is, a time from the time point at which the ratio of Brix to the total value of the acidity and the alcohol concentration of the fermentation liquid changes to the time point at which aeration and/or stirring is continuously stopped for 15 minutes. The "fermentation time" is not particularly limited, but can be, for example, in a range of 5 hours to 100 hours, in a range of 10 hours to 90 hours, in a range of 12 hours to 85 hours, or in a range of 13 hours to 80 hours.

More specifically, an upper limit of the "fermentation time" is 100 hours or shorter, and can be 95 hours or shorter, 90 hours or shorter, 85 hours or shorter, 80 hours or shorter, 79 hours or shorter, 78 hours or shorter, 77 hours or shorter, 76 hours or shorter, 75 hours or shorter, 74 hours or shorter, or 73 hours or shorter. On the other hand, a lower limit of the "fermentation time" is not particularly limited, and can be 5 hours or longer, 6 hours or longer, 7 hours or longer, 8 hours or longer, 9 hours or longer, 10 hours or longer, 11 hours or longer, 12 hours or longer, 13 hours or longer, or 16 hours or longer.

The "bacterial growth rate" is determined by dividing a change in a value obtained by multiplying the absorbance for a certain period by the liquid volume of the fermentation liquid in the fermentation step by time. Specifically, the "bacterial growth rate" represents a change in a value obtained by multiplying the absorbance per hour by the liquid volume (L) of the fermentation liquid. More specifically, for example, when the absorbance at an arbitrary time $t1$ [h] is $at1$ and the liquid volume is $Lt1$ [L], and the absorbance at another arbitrary time $t2$ [h] is $at2$ and the liquid volume is $Lt2$ [L], the "bacterial growth rate" can be calculated by $(at2 \times Lt2 - at1 \times Lt1)/(t2 - t1)$. Still more specifically, for example, when $t1 = 1$ [h], $t2 = 2$ [h], $at1 = 0.1$, $at2 = 0.2$, $Lt1 = 1.0$ [L], and $Lt2 = 1.5$ [L], the bacterial growth rate is calculated as $(0.2 \times 1.5 - 0.1 \times 1)/(t2 - t1) = 0.2/h$. The "average bacterial growth rate" in the entire fermentation step represents the arithmetic mean of the bacterial growth rates measured at a finite number of measurement points in the fermentation step. Note that, in the present disclosure, the term "average value" (may also be referred to simply as "average" or "arithmetic mean") refers to an "arithmetic mean" unless otherwise specified. When the "average bacterial growth rate" is determined, the average of bacterial growth rates measured at at least three or more points among a finite number of measurement points in the fermentation step is used, and at least one of these points needs to be measured at a time point after 50% of the fermentation time in the entire fermentation step has elapsed. More specifically, the "average bacterial growth rate" can be determined by calculating the arithmetic mean of bacterial growth rates measured at five or more points, including three points: the start of fermentation, the end of fermentation, and the time point at which 50% of the fermentation time in the entire fermentation step has elapsed, and additionally one or more points between the start of fermentation and the time point at which 50% of the fermentation time in the entire fermentation step has elapsed, and one or more points between the time point at which 50% of the fermentation time in the entire fermentation step has elapsed and the end of fermentation.

It is preferable that the "bacterial growth rate" of the fermentation liquid becomes greater than the "average bacterial growth rate" in the entire fermentation step in a shorter time from the time point at which the ratio of Brix to the total value of the acidity and alcohol (ethanol) concentration of the fermentation liquid changes (start of fermentation). The time from the time point at which the ratio of Brix to the total value of the acidity and the alcohol (ethanol) concentration of the fermentation liquid changes to the time point at which the bacterial growth rate of the fermentation liquid becomes greater than the average bacterial growth rate in the entire fermentation step is not particularly limited, but can be, for example, in a range of 0.1 hours to 80 hours, preferably in a range of 0.25 hours to 70 hours, more preferably in a range of 0.5 hours to 60 hours, and still more preferably in a range of 1 hour to 54 hours. By setting the time within this range, the method for producing vinegar of the present embodiment can reduce the influence on acetic acid-producing bacteria in the entire fermentation step (cessation of acetic acid production or rapid increase in acetic acid production), and the degree of production of acetic acid can be appropriately maintained, and as a result, fermentation can be more easily controlled.

More specifically, an upper limit of the time is 80 hours or shorter, but can be 75 hours or shorter, 70 hours or shorter, 68 hours or shorter, 67 hours or shorter, 65 hours or shorter, 63 hours or shorter, 60 hours or shorter, 58 hours or shorter, 55 hours or shorter, 54 hours or shorter, 52 hours or shorter, 50 hours or shorter, 49 hours or shorter, 48 hours or shorter, 45 hours or shorter, 40 hours or shorter, 35 hours or shorter, 30 hours or shorter, 25 hours or shorter, 20 hours or shorter, 15 hours or shorter, or 10 hours or shorter. On the other hand, a lower limit of the time is not particularly limited, but can be 0.1 hours or longer, 0.2 hours or longer, 0.3 hours or longer, 0.4 hours or longer, 0.5 hours or longer, 0.6 hours or longer, 0.7 hours or longer, 0.8 hours or longer, 0.9 hours or longer, 1 hour or longer, 1.2 hours or longer, 1.5 hours or longer, 1.8 hours or longer, 2.0 hours or longer, 2.5 hours or longer, or 3.0 hours or longer.

In addition, in the entire fermentation step, a ratio of the time from the time point at which the ratio of Brix to the total value of the acidity and the alcohol (ethanol) concentration of the fermentation liquid (start of fermentation) changes to the time point at which the bacterial growth rate of the fermentation liquid becomes greater than the average bacterial growth rate in the entire fermentation step is not particularly limited, but can be, for example, in a range of 3% to 80% of the fermentation time in the entire fermentation step, and is preferably in a range of 4.5% to 75%, more preferably in a range of 6% to 70%, and still more preferably in a range of 6.5% to 68%.

More specifically, an upper limit of the ratio of the time is 80% or less, and can be 79% or less, 78% or less, 75% or less, 74% or less, 72.5% or less, 72% or less, 70% or less, 69% or less, 68% or less, 67.5% or less, 67% or less, or 66.7% or less. On the other hand, a lower limit thereof is not particularly limited, and can be 3% or more, 3.5% or more, 4% or more, 4.5% or more, 5% or more, 5.5% or more, 6% or more, 6.5% or more, 7% or more, 7.2% or more, 7.3% or more, 7.4% or more, or 7.5% or more.

The ratio of the time from the time point at which the ratio of Brix to the total value of the acidity and the alcohol (ethanol) concentration of the fermentation liquid in the entire fermentation step changes (start of fermentation) to the time point at which the bacterial growth rate of the fermentation liquid becomes greater than the average bacterial growth rate in the entire fermentation step is determined by dividing the time [h] from the time point at which the ratio of Brix to the total value of the acidity and the alcohol concentration of the fermentation liquid changes to the time point at which the bacterial growth rate of the fermentation liquid becomes greater than the average bacterial growth rate in the entire fermentation step, by the time [h] during which fermentation is performed in the fermentation step, that is, from the time point at which the ratio of Brix to the total value of the acidity and the alcohol concentration of the fermentation liquid changes to the time point at which aeration and/or stirring is continuously stopped for 15 minutes. More specifically, in the entire fermentation step, when the time point at which the bacterial growth rate of the fermentation liquid becomes greater than the average bacterial growth rate in the entire fermentation step is 4 hours after the time point at which the ratio of Brix to the total value of the acidity and the alcohol (ethanol) concentration of the fermentation liquid changes (start of fermentation), and the duration of the fermentation step is 16 hours, the ratio is determined to be 25% (calculation formula: $4/16 \times 100$).

The term "acidity" refers to "acidity in terms of acetic acid" as previously described. In the present embodiment, the "acidity" is measured in accordance with the methods for measuring the "acidity" defined in the Japanese Agricultural Standard for brewed vinegar (the Ministry of Agriculture, Forestry and Fisheries Notification No. 1626 dated December 13, 2019). Specifically, the "acidity" is determined by measuring the concentration of hydrogen ions in a sample by a neutralization titration method, and multiplying the value by the molecular weight of acetic acid (60.05 g/mol), which is a monovalent carboxylic acid.

The "alcohol (ethanol) concentration" is measured by a GC (FID) method, specifically by a method described in Examples described below. The FID can measure a concentration of the component in the sample by burning an organic compound in a hydrogen flame formed by air and hydrogen, detecting changes in the electrodes that occur when the ionized compound is collected at the electrode portion, analyzing the sample and a standard sample diluted to an arbitrary concentration, and comparing the values.

The "ratio of the alcohol (ethanol) concentration to the total value of the acidity and the alcohol (ethanol) concentration" is determined by dividing the alcohol (ethanol) concentration calculated by the above method by the total value of the acidity and the alcohol (ethanol) concentration calculated by the above method. In addition, the "rate of increase in the ratio of the alcohol concentration to the total value of the acidity and the alcohol (ethanol) concentration" is determined by dividing a change in the ratio of the alcohol (ethanol) concentration to the total value of the acidity and the alcohol concentration over a certain period by time. Specifically, the "rate of increase in the ratio of the alcohol (ethanol) concentration to the total value of the acidity and the alcohol (ethanol) concentration" represents a change in the ratio per hour of the alcohol concentration to the total value of the acidity and the alcohol concentration. More specifically, for example, in a period particularly from the start of fermentation to 3 hours after the start, when the acidity and the alcohol (ethanol) concentration at an arbitrary time $t1$ [h] are $st1$ [w/v%] and $et1$ [v/v%], respectively, and the acidity and alcohol (ethanol) concentration at another arbitrary time $t2$ [h] are $st2$ [w/v%] and $et2$ [v/v%], respectively, the "rate of increase in the ratio of the alcohol concentration to the total value of the acidity and the alcohol concentration" can be calculated by $(st2 \times et2 - st1 \times et1)/(t2 - t1)$. More specifically, when $t1 = 1$ [h], $t2 = 2$ [h], $st1 = 4.0$ [w/v%], $st2 = 3.6$ [w/v%], $et1 = 1.0$ [v/v%], and $et2 = 1.2$ [v/v%], the "rate of increase in the ratio of the alcohol concentration to the total value of the acidity and the alcohol concentration" is $(1.2/4.8 - 1.0/5.0)/(t2 - t1) = 0.05$/h. Note that $t1$ is a time point within 2 hours from the start of fermentation.

That is, the case where the rate of increase in the ratio of the alcohol concentration to the total value of the acidity and the alcohol (ethanol) concentration of the fermentation liquid from the time point at which the ratio of Brix to the total value of the acidity and the alcohol (ethanol) concentration of the fermentation liquid changes up to 3 hours after the time point is - 0.2/h or more, refers to a state in which, assuming the start of fermentation as 0 hours, the average rate of increase in the ratio of the alcohol (ethanol) concentration to the total value of the acidity and the alcohol (ethanol) concentration up to 3 hours after the start of fermentation does not fall below -0.2/h. More specifically, it refers to a state in which, assuming the start of fermentation as 0 hours, the average of the ratio of the alcohol (ethanol) concentration to the total value of the acidity and the alcohol (ethanol) concentration during each of the periods from 0 hours to 1 hour, from 1 hour to 2 hours, and from 2 hours to 3 hours does not fall below -0.2/h. Note that, from the viewpoint of facilitating fermentation control, it is preferable that the rate of increase in the ratio of the alcohol (ethanol) concentration to the total value of the acidity and the alcohol (ethanol) concentration during each of the periods from 0 to 1 hour, from 1 to 2 hours, and from 2 to 3 hours does not fall below -0.2/h.

The rate of increase in the ratio of the alcohol (ethanol) concentration to the total value of the acidity and the alcohol (ethanol) concentration of the fermentation liquid from a time point at which the ratio of Brix to the total value of the acidity and the alcohol (ethanol) concentration of the fermentation liquid changes (start of fermentation) up to 3 hours after the time point is - 0.2/h or more, but is not particularly limited. The rate of increase may be within a range of, for example, -0.2/h to 0.3/h, preferably -0.1/h to 0.2/h, more preferably -0.05/h to 0.1/h, and still more preferably 0/h to 0.08/h. By setting the rate of increase within this range, the method for producing vinegar of the present embodiment can appropriately suppress the occurrence of a stuffy odor.

More specifically, a lower limit of the rate of increase is -0.2/h or more, and can be - 0.15/h or more, -0.1/h or more, -0.05/h or more, -0.01/h or more, -0.005/h or more, -0.001/h or more, -0.0005/h or more, -0.0001/h or more, 0/h or more, 0.0001/h or more, 0.0005/h or more, 0.001/h or more, 0.005/h or more, 0.01/h or more, 0.015/h or more, 0.02/h or more, 0.025/h or more, or 0.03/h or more. On the other hand, an upper limit of the rate of increase is not particularly limited, but can be 0.3/h or less, 0.25/h or less, 0.2/h or less, 0.15/h or less, 0.1/h or less, 0.095/h or less, 0.09/h or less, 0.085/h or less, 0.08/h or less, 0.07/h or less, 0.06/h or less, or 0.05/h or less.

The "average alcohol (ethanol) concentration" in the entire fermentation step refers to the arithmetic mean of the alcohol (ethanol) concentrations measured at a finite number of measurement points in the fermentation step. When the average alcohol (ethanol) concentration is determined, the average of alcohol (ethanol) concentrations at at least three or more points is used, and at least one of the three points needs to be measured for the alcohol (ethanol) concentration at a time point after 50% of the total fermentation time in the entire fermentation step has elapsed. More specifically, the "average alcohol (ethanol) concentration" can be determined by calculating the arithmetic mean of alcohol (ethanol) concentrations measured at five or more points, including three points: the start of fermentation, the end of fermentation, and the time point at which 50% of the fermentation time in the entire fermentation step has elapsed, and additionally one or more points between the start of fermentation and the time point at which 50% of the fermentation time in the entire fermentation step has elapsed, and one or more points between the time point at which 50% of the fermentation time in the entire fermentation step has elapsed and the end of fermentation.

The average alcohol concentration in the entire fermentation step, that is, from the start of fermentation (the time point at which the ratio of Brix to the total value of the acidity and the alcohol concentration of the fermentation liquid changes) to the time point at which aeration and/or stirring is continuously stopped for 15 minutes, is set to 0.2 v/v% or more, but is not limited thereto. The average alcohol concentration in the entire fermentation step may be, for example, in a range of 0.2 v/v% to 3.0 v/v%, and is preferably in a range of 0.3 v/v% to 2.5 v/v%, more preferably in a range of 0.4 v/v% to 2.0 v/v%, and still more preferably in a range of 0.5 v/v% to 1.5 v/v%. By setting the average alcohol concentration in the entire fermentation step within this range, the method for producing vinegar of the present embodiment can appropriately suppress the occurrence of a stuffy odor. On the other hand, for example, in a conventional continuous fermentation method (continuous brewing method), which is one type of submerged fermentation method, the fermentation liquid is generally adjusted so that the alcohol concentration remains constantly below 0.2 v/v% during the fermentation step, and therefore, a stuffy odor is likely to occur. In addition, in a conventional static fermentation method (surface fermentation method), although the average alcohol concentration during the fermentation period is high, acetic acid is produced only at the surface of the fermentation liquid, and therefore, the fermentation time becomes extremely long.

Specifically, a lower limit of the average alcohol concentration is 0.2 v/v% or more, but can be 0.22 v/v% or more, 0.24 v/v% or more, 0.26 v/v% or more, 0.28 v/v% or more, 0.30 v/v% or more, 0.32 v/v% or more, 0.35 v/v% or more, 0.38 v/v% or more, 0.4 v/v% or more, 0.42 v/v% or more, 0.45 v/v% or more, 0.48 v/v% or more, 0.5 v/v% or more, 0.52 v/v% or more, 0.55 v/v% or more, 0.6 v/v% or more, 0.65 v/v% or more, 0.7 v/v% or more, 0.75 v/v% or more, 0.8 v/v% or more, 0.85 v/v% or more, or 0.9 v/v% or more. On the other hand, an upper limit of the average alcohol concentration is not particularly limited, but can be 3.0 v/v% or less, 2.8 v/v% or less, 2.5 v/v% or less, 2.3 v/v% or less, 2.0 v/v% or less, 1.8 v/v% or less, 1.7 v/v% or less, 1.6 v/v% or less, 1.5 v/v% or less, 1.4 v/v% or less, 1.3 v/v% or less, 1.2 v/v% or less, or 1.0 v/v% or less.

The expression "after 50% of the fermentation time in the entire fermentation step has elapsed" refers to the period from the time point corresponding to a value obtained by multiplying the fermentation time in the entire fermentation step by 0.5, to the time point at which aeration and/or stirring is continuously stopped for 15 minutes.

In the present embodiment, it is preferable that, in the fermentation step after 50% of the fermentation time in the entire fermentation step has elapsed, the total time during which the ratio of the alcohol concentration to the total value of the acidity and the alcohol (ethanol) concentration is 0.04 or less is short. The total time during which the ratio is 0.04 or less is not particularly limited, but can be, for example, in a range of 0 hours to 5 hours, and is preferably in a range of 0.2 hours to 4 hours, more preferably in a range of 0.6 hours to 3 hours, and still more preferably in a range of 1.0 hour to 2.5 hours. By setting the total time within this range, the method for producing vinegar of the present embodiment can further suppress the occurrence of a stuffy odor.

More specifically, an upper limit of the total time is 5 hours or shorter, but can be 4.5 hours or shorter, 4.0 hours or shorter, 3.5 hours or shorter, 3.0 hours or shorter, 2.5 hours or shorter, or 2.0 hours or shorter. On the other hand, a lower limit of the time is not particularly limited, but can be 0 hours or longer, 0.2 hours or longer, 0.4 hours or longer, 0.6 hours or longer, 0.8 hours or longer, or 1.0 hour or longer.

In addition, in the present embodiment, it is preferable that, in the fermentation step after 50% of the fermentation time in the entire fermentation step has elapsed, the total time during which the ratio of the alcohol (ethanol) concentration to the total value of the acidity and the alcohol (ethanol) concentration is 0.04 or less and the alcohol (ethanol) concentration of the fermentation liquid is less than 0.2 v/v% is short. The total time under this condition is not particularly limited, but can be, for example, in a range of 0 hours to 5 hours, and is preferably in a range of 0.2 hours to 4 hours, more preferably in a range of 0.6 hours to 3 hours, and still more preferably in a range of 1.0 hour to 2.5 hours. By setting the total time within this range, the method for producing vinegar of the present embodiment can more appropriately suppress the occurrence of a stuffy odor.

More specifically, an upper limit of the total time is 5 hours or shorter, but can be 4.5 hours or shorter, 4.0 hours or shorter, 3.5 hours or shorter, 3.0 hours or shorter, 2.5 hours or shorter, or 2.0 hours or shorter. On the other hand, a lower limit of the time is not particularly limited, but can be 0 hours or longer, 0.2 hours or longer, 0.4 hours or longer, 0.6 hours or longer, 0.8 hours or longer, or 1.0 hour or longer.

The fermentation apparatus and aeration apparatus used in the present embodiment are not particularly limited, and a general fermentation apparatus capable of aeration and/or stirring can be used. For example, the fermentation apparatus may be a stirring-aeration fermentation tank or an airlift fermentation tank, and aeration may be performed by supplying a gas containing oxygen, such as air or oxygen gas, through an aeration tube to these fermentation tanks, or aeration may be performed by cavitation caused by stirring, without separately supplying a gas containing oxygen such as air or oxygen gas. In addition, a fermentation temperature is not particularly limited, but can be in a range of 20.0°C to 40.0°C, preferably in a range of 25.0°C to 38.0°C, and more preferably in a range of 28.0°C to 35.0°C, and can be appropriately adjusted and changed to the above range in the seed vinegar production step and the fermentation step.

An aeration rate into the fermentation tank may be appropriately set in consideration of the fermentation conditions, can be, for example, in a range of 0.01 vvm to 1.0 vvm (aeration volume per volume of fermentation liquid per minute), and is preferably in a range of 0.03 vvm to 0.7 vvm, and more preferably in a range of 0.04 vvm to 0.3 vvm. Note that, in the fermentation step, the aeration rate does not need to be constant, and may vary depending on changes in the volume of the fermentation liquid, and may be appropriately adjusted within the above range. In addition, when aeration is performed, the gas may be supplied to the lower part of the fermentation liquid in the fermentation tank, and dispersed and finely divided by a stirrer so as to be distributed throughout the entire fermentation liquid. The unit "vvm (volume per volume per minute)" for the aeration rate refers to a volumetric aeration rate per unit time. More specifically, "vvm" is calculated by dividing the aeration volume (L) per minute (in the present disclosure, the "minute" may be expressed as "minute" or "min") by the volume (L) of the fermentation liquid. More specifically, for example, when the aeration rate per minute at an arbitrary time t is 1 L/minute and the volume (L) of the fermentation liquid is 10 L, the aeration rate vvm is 1/10 = 0.1.

Before the time point at which the ratio of Brix to the total value of the acidity and the alcohol (ethanol) concentration of the fermentation liquid changes (the start of the fermentation step or the start of fermentation) (may broadly be regarded as the seed vinegar production step), there is no particular limitation on the aeration rate [vvm] as compared with the aeration rate [vvm] at the time point at which the ratio of Brix to the total value of the acidity and the alcohol (ethanol) concentration of the fermentation liquid changes, but a step in which the aeration rate is increased within a predetermined range can be included. The increase in the aeration rate can be, for example, within a range of 0.05 vvm to 10 vvm, preferably within a range of 0.1 vvm to 8 vvm, more preferably within a range of 0.15 vvm to 6 vvm, and still more preferably within a range of 0.2 vvm to 4.5 vvm. More specifically, when the aeration rate at the time point at which the ratio of Brix to the total value of the acidity and the alcohol concentration of the fermentation liquid changes is 0.1 vvm, the aeration rate before the time point at which the ratio of Brix to the total value of the acidity and the alcohol concentration of the fermentation liquid changes can be set to 0.25 vvm, and the increase in the aeration rate in this case is 0.15 vvm. By setting the increase in the aeration rate within the above range, it is possible to reduce the pungent odor of the vinegar obtained in the method for producing vinegar of the present embodiment.

More specifically, a lower limit of the aeration rate increased before the start of fermentation as compared with the aeration rate at the start of fermentation is 0.05 vvm or more, but can be 0.07 vvm or more, 0.1 vvm or more, 0.12 vvm or more, 0.15 vvm or more, 0.18 vvm or more, 0.2 vvm or more, 0.22 vvm or more, 0.25 vvm or more, 0.27 vvm or more, 0.29 vvm or more, 0.3 vvm or more, 0.4 or more, 0.5 vvm or more, 0.6 vvm or more, 0.7 vvm or more, 0.8 vvm or more, or 0.9 vvm or more. On the other hand, an upper limit of the aeration rate is not particularly limited, but can be 10 vvm or less, 9.0 vvm or less, 8.0 vvm or less, 7.0 vvm or less, 6.0 vvm or less, 5.0 vvm or less, or 4.5 vvm or less. Note that, "before the time point at which the ratio of Brix to the total value of the acidity and the alcohol (ethanol) concentration of the fermentation liquid changes (the start of the fermentation step or the start of fermentation) (may broadly be regarded as the seed vinegar production step), an increase in the aeration rate [vvm] as compared with the aeration rate [vvm] at the time point at which the ratio of Brix to the total value of the acidity and the alcohol (ethanol) concentration of the fermentation liquid changes" can be achieved, for example, by including a step of temporarily increasing the aeration rate to the seed vinegar fermentation liquid by aeration and/or stirring before the addition of a fermentation nutrient source to the seed vinegar fermentation liquid. More specifically, for example, it can be achieved by increasing the aeration rate to the seed vinegar fermentation liquid by aeration and/or stirring before the addition of the fermentation nutrient source to the seed vinegar fermentation liquid, and then decreasing the aeration rate to the seed vinegar fermentation liquid, by the time of the addition of the fermentation nutrient source, as compared with the maximum aeration rate at the time point at which the aeration rate is increased.

When increasing the aeration rate as compared with the aeration rate at the time point at which the ratio of Brix to the total value of the acidity and the alcohol (ethanol) concentration of the fermentation liquid changes before the time point at which the ratio of Brix to the total value of the acidity and the alcohol (ethanol) concentration of the fermentation liquid changes (the fermentation start time), a time point at which the aeration rate is increased may be any time before the fermentation start time, and is not particularly limited, but, for example, the time point can be within 2 hours before the fermentation start time, and is preferably within 1.5 hours, more preferably within 1 hour, and still more preferably within 0.5 hours. More specifically, the time point can be within 0.8 hours, 0.6 hours, 0.5 hours, 0.4 hours, 0.3 hours, 0.2 hours, 0.1 hours, or 0.05 hours.

When increasing the aeration rate as compared with the aeration rate at the time point at which the ratio of Brix to the total value of the acidity and the alcohol (ethanol) concentration of the fermentation liquid changes before the time point at which the ratio of Brix to the total value of the acidity and the alcohol (ethanol) concentration of the fermentation liquid changes, the period for increasing the aeration rate (in minutes, "minute", or "min") is not particularly limited, but can be, for example, in a range of 0.1 minutes to 60 minutes, and is preferably in a range of 0.2 minutes to 30 minutes. More specifically, an upper limit of the time for increasing the aeration rate is 60 minutes or shorter, but can be 50 minutes or shorter, 45 minutes or shorter, 35 minutes or shorter, 25 minutes or shorter, 20 minutes or shorter, 15 minutes or shorter, or 10 minutes or shorter. On the other hand, a lower limit of the period is not particularly limited, but can be 0.1 minutes or longer, 0.2 minutes or longer, 0.4 minutes or longer, 0.6 minutes or longer, 0.8 minutes or longer, 1 minute or longer, or 2 minutes or longer. Note that, the period during which the aeration rate is increased may be appropriately adjusted according to the aforementioned time point at which the aeration rate is increased.

The alcohol concentration at the time point at which aeration and/or stirring is continuously stopped for 15 minutes (the end of fermentation in the fermentation step) is not particularly limited, but can be in a range of 0.00 v/v% to 0.50 v/v%, and is preferably in a range of 0.10 v/v% to 0.45 v/v%, and more preferably in a range of 0.20 v/v% to 0.40 v/v%.

More specifically, an upper limit of the alcohol concentration is 0.50 v/v% or less, but can be 0.48 v/v% or less, 0.46 v/v% or less, 0.44 v/v% or less, 0.42 v/v% or less, 0.40 v/v% or less, 0.38 v/v% or less, 0.36 v/v% or less, 0.34 v/v% or less, 0.32 v/v% or less, 0.30 v/v% or less, 0.28 v/v% or less, 0.26 v/v% or less, or 0.24 v/v% or less. On the other hand, a lower limit of the alcohol concentration is not particularly limited, but can be 0.0 v/v% or more, 0.01 v/v% or more, 0.05 v/v% or more, 0.10 v/v% or more, 0.15 v/v% or more, 0.18 v/v% or more, or 0.22 v/v% or more.

In addition, when the average alcohol concentration of the fermentation liquid in the entire fermentation step is 0.2 v/v% or more, there may be a time during the fermentation in which the alcohol concentration becomes less than 0.2 v/v%. The time during which the alcohol concentration of the fermentation liquid becomes less than 0.2 v/v% is not particularly limited, but can be, for example, in a range of 0 hours to 5 hours, and is preferably in a range of 0.1 hours to 4 hours, more preferably in a range of 0.3 hours to 3 hours, and still more preferably in a range of 0.5 hours to 2.5 hours. By setting the time within this range, the method for producing vinegar of the present embodiment can appropriately suppress the influence on acetic acid-producing bacteria (a decrease or cessation in the degree of acetic acid production).

More specifically, an upper limit of the time is 5 hours or shorter, but can be 4.5 hours or shorter, 4 hours or shorter, 3.5 hours or shorter, 3 hours or shorter, 2.5 hours or shorter, 2 hours or shorter, or 1.5 hours or shorter. On the other hand, a lower limit of the time is not particularly limited, but can be 0 hours or longer, 0.1 hours or longer, 0.2 hours or longer, 0.3 hours or longer, 0.4 hours or longer, 0.5 hours or longer, 0.7 hours or longer, or 1 hour or longer.

In addition, a ratio of the time during which the alcohol concentration of the fermentation liquid becomes less than 0.2 v/v% in the entire fermentation step to the fermentation time (from the start of fermentation to the end of fermentation) in the entire fermentation step is not particularly limited, but can be, for example, in a range of 0% to 30% of the fermentation time in the entire fermentation step, and is preferably in a range of 0.5% to 27%, more preferably in a range of 1.0% to 23%, and still more preferably in a range of 1.2% to 20%. By setting the time within this range, the method for producing vinegar of the present embodiment can appropriately suppress the influence on acetic acid-producing bacteria (a decrease or cessation in the degree of acetic acid production).

The ratio of the time during which the alcohol concentration of the fermentation liquid becomes less than 0.2 v/v% in the entire fermentation step to the fermentation time (from the start of fermentation to the end of fermentation) in the entire fermentation step is determined by dividing the total time [h] during which the alcohol concentration becomes less than 0.2 v/v% by the time at which the fermentation step is performed, that is, the time [h] from the time point at which the ratio of Brix to the total value of the acidity and the alcohol concentration of the fermentation liquid changes to the time point at which aeration and/or stirring is continuously stopped for 15 minutes. Specifically, when the time during which the alcohol concentration of the fermentation liquid becomes less than 0.2 v/v% in the entire fermentation step is 1 hour and the time at which the fermentation step is performed is 20 hours, the ratio is determined to be 5% (calculation formula: 1/20 × 100).

More specifically, an upper limit of the ratio of the time is 30% or less, and can be 29% or less, 27% or less, 25% or less, 23% or less, 21% or less, 20% or less, 15% or less, 12% or less, 10% or less, 8% or less, 6% or less, or 5.5% or less. On the other hand, a lower limit thereof is not particularly limited, but can be 0% or more, 0.1% or more, 0.25% or more, 0.5% or more, 0.75% or more, 1.0% or more, or 1.2% or more.

In the present embodiment, it is preferable that, in the fermentation step after 50% of the fermentation time in the entire fermentation step has elapsed, the time during which the ratio of Brix to the alcohol concentration becomes 40 or more is short. In the fermentation step after 50% of the fermentation time in the entire fermentation step has elapsed, the total time during which the ratio of Brix to the alcohol concentration becomes 40 or more is not particularly limited, and can be, for example, 0 hours or longer and 5 hours or shorter, and is preferably 0 hours or longer and 3 hours or shorter, and more preferably 0 hours or longer and 1.2 hours or shorter.

More specifically, an upper limit of the time is 3 hours or shorter, but can be 2.7 hours or shorter, 2.5 hours or shorter, 2.3 hours or shorter, 2 hours or shorter, 1.8 hours or shorter, 1.6 hours or shorter, 1.4 hours or shorter, or 1.2 hours or shorter. On the other hand, a lower limit of the time is not particularly limited, but can be 0 hours or longer, 0.1 hours or longer, 0.2 hours or longer, 0.3 hours or longer, 0.4 hours or longer, or 0.5 hours or longer.

The rate of increase in the ratio of Brix to the alcohol concentration in the fermentation liquid in the fermentation step is not particularly limited, but can be, for example, -50/h or more and 100/h or less, and is preferably -35/h or more and 70/h or less, and more preferably -20/h or more and 50/h or less. Specifically, an upper limit of the increase rate of the ratio of Brix to the alcohol concentration of the fermentation liquid is 100/h or less, but can be 90/h or less, 80/h or less, 70/h or less, 60/h or less, 55/h or less, 50/h or less, 45/h or less, or 40/h or less. On the other hand, a lower limit thereof is not particularly limited, but can be -50/h or more, -45/h or more, - 40/h or more, -35/h or more, -30/h or more, -25/h or more, -20/h or more, or -15/h or more.

The ratio of Brix to the alcohol (ethanol) concentration of the fermentation liquid is determined by dividing the Brix calculated by the above method by the alcohol (ethanol) concentration calculated by the above method. In addition, the rate of increase in the ratio of Brix to the alcohol (ethanol) concentration of the fermentation liquid is determined by dividing a change in the ratio of Brix to the alcohol (ethanol) concentration of the fermentation liquid over a certain period by the time. Specifically, the rate of increase in the ratio of Brix to the alcohol (ethanol) concentration of the fermentation liquid represents a change per hour in the ratio of Brix to the alcohol (ethanol) concentration of the fermentation liquid. More specifically, for example, when the alcohol (ethanol) concentration and the Brix at an arbitrary time $t_1$ [h] are $et_1$ [v/v%] and $bt_1$ [degrees], respectively, and the alcohol (ethanol) concentration and the Brix at another arbitrary time $t_2$ [h] are $et_2$ [v/v%] and $bt_2$ [degrees], respectively, the rate of increase in the ratio of Brix to the alcohol (ethanol) concentration of the fermentation liquid can be calculated by $(et_2 \times bt_2 - et_1 \times bt_1)/(t_2 - t_1)$. More specifically, when $t_1 = 1$ [h], $t_2 = 2$ [h], $et_1 = 1.5$ [v/v%], $et_2 = 1.51$ [v/v%], $bt_1 = 15.0$ [degrees], and $bt_2 = 15.1$ [degrees], the rate of increase in the ratio of Brix to the alcohol (ethanol) concentration is $(15.1/1.51 - 15.0/1.5)/(t_2 - t_1) = 0/h$.

The fermentation nutrient source added in the fermentation step may be one kind or two or more kinds. The ratio of Brix [degrees] to the total value of the alcohol concentration [v/v%] of these fermentation nutrient sources is not particularly limited, but can be, for example, 0 or more and 50 or less, and is preferably 0 or more and 40 or less, more preferably 0 or more and 30 or less, and still more preferably 0 or more and 20 or less. Specifically, an upper limit of the ratio of Brix [degrees] to the total value of the alcohol concentration [v/v%] of the fermentation nutrient sources is 50 or less, but can be 48 or less, 45 or less, 43 or less, 40 or less, 35 or less, 30 or less, 25 or less, 20 or less, 18 or less, 16 or less, 14 or less, 13 or less, 11 or less, 9 or less, or 8.5 or less. On the other hand, a lower limit thereof is not particularly limited, but can be 0 or more, 0.1 or more, 0.2 or more, 0.3 or more, 0.4 or more, 0.5 or more, 0.7 or more, 1.0 or more, 1.5 or more, 2.0 or more, 2.5 or more, or 3.0 or more.

The "seed vinegar production step" is a step of producing a seed vinegar fermentation liquid used in the fermentation step. Note that the seed vinegar production step may include a step of storing the produced seed vinegar fermentation liquid in the fermentation tank in which the seed vinegar fermentation liquid is produced or in another storage tank or the like until it is used in the fermentation step. Note that the seed vinegar production step may be performed before the fermentation step, or may be performed simultaneously with the fermentation step.

The fermentation tank for fermenting or storing the seed vinegar fermentation liquid containing acetic acid-producing bacteria and a fermentation culture medium may be different from the fermentation tank used to perform the fermentation step of the present disclosure, that is, the fermentation tank in which a fermentation nutrient source is added to the seed vinegar fermentation liquid to perform acetic acid fermentation. That is, the "seed vinegar production step" and the "fermentation step" may be performed using different fermentation tanks. By performing the "seed vinegar production step" and the "fermentation step" in different fermentation tanks, the seed vinegar production step can be continued while fermentation is performed in the fermentation tank that performs the fermentation step. That is, the seed vinegar fermentation liquid can be continuously produced in a fermentation tank different from the fermentation tank for the fermentation step. In addition, the seed vinegar fermentation liquid produced in the fermentation tank for the seed vinegar production step can be transferred and distributed to a plurality of fermentation tanks for the fermentation step, and the fermentation step can be performed in each fermentation tank for the fermentation step. In this case, a single type of seed vinegar fermentation liquid can be used to produce a plurality of types of vinegar, thereby improving productivity. In addition, the "seed vinegar production step" and the "fermentation step" may be performed in the same fermentation tank, and the fermentation step can be performed subsequently to the seed vinegar production step while eliminating the time and effort for transferring the seed vinegar fermentation liquid. Even when the "seed vinegar production step" and the "fermentation step" are performed in the same fermentation tank, the start of fermentation in the fermentation step of the present disclosure is a time point at which the ratio of Brix to the total value of the acidity and alcohol concentration of the fermentation liquid changes.

The "final step" is a step in the fermentation step in which the addition of the fermentation nutrient source is stopped, the acetic acid-producing bacteria convert the alcohol (ethanol) in the fermentation liquid into acetic acid, and fermentation is continued until the composition (acidity and alcohol (ethanol) concentration) of the target vinegar is achieved, and generally, is a step in which the addition of the fermentation nutrient source is stopped and the alcohol (ethanol) concentration of the fermentation liquid is reduced to less than 0.5 v/v%. The final step may be performed during the fermentation step and before the end of the fermentation step, or may be performed after the end of the fermentation step, that is, after the time point at which the aeration and/or stirring of the fermentation liquid is continuously stopped for 15 minutes.

When the final step is performed before the end of the fermentation step, the total time during which the final step is performed in the fermentation step is not particularly limited, but can be, for example, in a range of 0 hours to 10 hours, and is preferably in a range of 0.5 hours to 8 hours, and more preferably in a range of 1 hour to 5 hours.

More specifically, an upper limit of the total time is 10 hours or shorter, and can be 9 hours or shorter, 7 hours or shorter, 6 hours or shorter, 5 hours or shorter, 4.5 hours or shorter, 4 hours or shorter, 3.5 hours or shorter, 3 hours or shorter, 2.5 hours or shorter, 2 hours or shorter, or 1.5 hours or shorter. On the other hand, a lower limit of the time is not particularly limited, but can be 0 hours or longer, 0.1 hours or longer, 0.2 hours or longer, 0.3 hours or longer, 0.4 hours or longer, 0.5 hours or longer, 0.7 hours or longer, 1 hour or longer, or 1.2 hours or longer. Further, it is preferable that the fermentation liquid is removed from the fermentation tank as soon as possible after the final step, and acetic acid-producing bacteria (acetic acid bacteria) and the like are removed by an appropriate clarification treatment (filtration using a filtering agent, membrane treatment, or the like). In addition, heat sterilization or aging may be appropriately performed as necessary.

After fermentation is performed by the above method, the fermentation liquid removed from the fermentation tank after completion of the fermentation can be subsequently commercialized as vinegar by a normal method through known steps such as removal of acetic acid-producing bacteria, aging, clarification treatment, and sterilization. That is, as an aspect of the present disclosure, the present disclosure encompasses "vinegar produced by the production method disclosed in the first embodiment". In addition, according to an aspect of the present disclosure, the present disclosure provides a method for producing a seasoning, confectionery, beverage, soup, main dish, side dish, staple food, or feed (feed for pet animals (pet food, particularly for dogs and cats), and feed for livestock animals), the method including a step of blending vinegar produced by the production method disclosed in the first embodiment. In addition, according to an aspect of the present disclosure, the present disclosure provides use of vinegar produced by the production method disclosed in the first embodiment for production of a seasoning, confectionery, beverage, soup, main dish, side dish, staple food, or feed (feed for pet animals (pet food, particularly for dogs and cats), and feed for livestock animals).

The confectionery refers to a food composition produced and cooked as a palatable product having a taste sensation by enhancing taste such as sweetness or saltiness, devising texture for tactile sensation, or incorporating various aromas for olfactory stimulation. More specifically, examples thereof include jellies, puddings, chocolates, bars (snack bars), and frozen confectioneries (ice cream, sherbet, and the like), and among them, jelly and frozen confectioneries (ice cream, sherbet, and the like) are preferable, and jellies are particularly preferable.

Soup is a food composition containing a large amount of water, which is obtained by cooking ingredients such as meat, seafood, eggs, milk, vegetables, fruits, herbs, and seaweed by an appropriate method. Specific examples of the soup include minestrone, hot and sour soup, white broth soup, and jjigae.

The main dish refers to a food composition cooked mainly for the purpose of protein intake, and examples thereof include hamburger steak, fried chicken, steak, omelet, braised pork, meatballs, ham, bacon, yudofu (hot tofu), grilled fish, boiled fish, twice-cooked pork, pepper steak, bang bang chicken, stir-fried vegetables with meat, cabbage rolls, and stuffed bell peppers with ground meat.

The side dish refers to a food composition cooked mainly for the purpose of ingesting vitamins, minerals, dietary fibers, and the like, and examples thereof include salads, steamed vegetables, stir-fried vegetables without meat, boiled vegetables, vegetables dressed with sesame sauce (such as spinach with sesame), pickled vegetables, and marinated vegetables.

The staple food refers to a food composition cooked mainly for the purpose of ingesting carbohydrates, and examples thereof include cooked rice, noodles (such as ramen, Japanese soba, udon, pasta, and pho), bread, and cereals.

The seasoning is not particularly limited, and examples thereof include sauce (sesame-containing seasoning such as sesame sauce, sauces for grilled meat, and the like), dressing (non-oil dressings, separated dressings, emulsified dressings, and the like), seasoning vinegar (refers to a seasoning produced by blending vinegar as a main ingredient with sub-ingredients such as sugars and salt; examples thereof include general-purpose seasoned vinegar, seasoned vinegar for vinegared dishes, seasoned vinegar for sushi rice, pickling liquid for pickled foods (for example, pickles), and sweet vinegar), seasonings for rice, ponzu-based seasonings, seasonings containing dashi (for example, noodle soup base and hot pot soup base), seasonings for natto, seasonings for pickles, seasonings for meat, Worcestershire sauce, ketchup, oyster sauce, salsa, sambal sauce, chili sauce, spicy seasoning containing hot spices, chutney, mustard, and mayonnaise.

Examples of the beverage include fruit juice-containing beverages (for example, fruit juices, ades, near water, beauty drinks, and smoothies, made with citrus fruits (mandarin, orange, lemon, lime, grapefruit, yuzu, kabosu, sudachi, bergamot, pink grapefruit, hassaku, calamansi, shikuwasa, and the like), tropical fruits (pineapple, banana, guava, mango, acerola, papaya, passion fruit, and the like), lychee, strawberry, apple, peach, grapes (white grapes, red grapes, and the like), cassis, raspberry, pomegranate, Japanese plum, pear, apricot, plum, kiwi fruit, melon, blueberry, acai, and the like), dairy product-containing beverages (for example, beverages containing milk and processed milk products such as skim milk powder, whole milk powder, condensed milk, fermented milk, yogurt, fresh cream, sweetened condensed milk, butter, skim milk, cream powder, sweetened milk powder, formulated milk powder, whey powder, buttermilk powder, and the like), vegetable beverages (for example, juices, smoothies, or green juice made from tomatoes, carrots, pumpkins, and the like), soft drinks (for example, sports drinks, ades such as lemonade, and fruit-flavored drinks), carbonated beverages, jelly beverages, grain-based beverages (for example, grain-based beverages using rice, soy milk, or almonds as main ingredients), tea-based beverages (for example, black tea, oolong tea, green tea, dark tea, matcha, jasmine tea, rosehip tea, chamomile tea, roasted green tea (hojicha), and also blended teas (including grains such as Job's tears, barley, brown rice, soybeans, and corn; leaves such as persimmon leaves, loquat leaves, Kuma bamboo grass, jiaogulan, ashitaba, and houttuynia cordata; as well as kelp, safflower, shiitake mushrooms, reishi mushrooms, and the like)), coffee beverages, powdered beverages (for example, cocoa, green juice (aojiru), and the like), alcoholic beverages (for example, beer, beer-taste beverages such as happoshu, fruit wine, brewed liquors such as sake, distilled liquors such as shochu, whiskey, brandy, and spirits, mixed liquors such as liqueurs prepared by mixing distilled liquors with auxiliary ingredients like sugars, and further cocktails, fizzes, chu-hi, and the like (prepared by adding fruit juice, flavorings, emulsified flavorings (flavor formulations emulsified to stably disperse oil-soluble flavors in water), carbon dioxide, and the like to these liquors). Among them, a fruit juice-containing beverage is preferable. In addition, in an aspect of the present disclosure, the food composition of the present disclosure may contain a flavoring agent. Note that, as the flavoring agent, flavoring agents having a flavor of fruit juice described below (lemon flavoring agent, apple flavoring agent, pomegranate flavoring agent, and blueberry flavoring agent) can be mentioned; however, other flavoring agents such as yogurt flavoring agent, Japanese pepper flavoring agent, and ginger flavoring agent can also be used as appropriate, and the type thereof is not limited.

In addition, when describing the method for producing vinegar according to the present disclosure more specifically, the method for producing vinegar in the present disclosure may be a method for producing vinegar including the following steps.

A method for producing vinegar by performing fermentation while performing aeration and/or stirring, the method including at least the following steps:

(Step D) a step of preparing a seed vinegar fermentation liquid;
(Step E) a step of starting a fermentation step by starting addition of a fermentation nutrient source to the seed vinegar fermentation liquid to change a ratio of Brix to the total value of an acidity and an alcohol concentration of the fermentation liquid;
(Step F) a step of performing acetic acid fermentation by aeration and/or stirring until the acidity of the fermentation liquid reaches a predetermined value; and
(Step G) a step of terminating the fermentation by continuously stopping the aeration and/or stirring for 15 minutes or longer at a stage where the acidity of the fermentation liquid becomes equal to or greater than a predetermined value, in which from the step E to the step F, a rate of increase in an absorbance (660 nm) of the fermentation liquid from a time point at which a ratio of Brix to the total value of an acidity and an alcohol concentration of the fermentation liquid changes up to 3 hours after the time point is -0.2/h or more, from the step E to the step F, a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, and when the fermentation step is defined as a period from a time point at which the ratio of Brix to the total value of the acidity and the alcohol (ethanol) concentration of the fermentation liquid changes in the step E to a time point at which aeration and/or stirring is continuously stopped for 15 minutes in the step G, an average alcohol concentration of the fermentation liquid is 0.2 v/v% or more.

In the aspect, the steps E to G may be regarded as the fermentation step described in paragraph "0019". In addition, in the aspect, all the provisions relating to the method for producing vinegar can be optionally adopted. For example, the method may include the "final step", in which in the steps E and F, the addition of the fermentation nutrient source is further stopped, and acetic acid-producing bacteria oxidize the alcohol (ethanol) in the fermentation liquid to acetic acid and cause fermentation to proceed until the target vinegar composition (acidity and alcohol (ethanol) concentration) is achieved, and may include the "seed vinegar production step" in which a seed vinegar fermentation liquid used in the fermentation step is produced in the step D. Furthermore, between the steps D and E, before the time point at which the ratio of Brix to the total value of the acidity and the alcohol concentration of the fermentation liquid changes (that is, before adding the fermentation nutrient source to the seed vinegar fermentation liquid), the method may include a step of increasing the aeration rate by 0.1 vvm or more compared with the aeration rate at the time point at which the ratio of Brix to the total value of the acidity and the alcohol concentration of the fermentation liquid changes (that is, the time point at which addition of the fermentation nutrient source to the seed vinegar fermentation liquid starts). In addition, the time during which the alcohol concentration of the fermentation liquid in the steps E to G becomes less than 0.2 v/v% may be within 5 hours, and the fermentation tank for fermenting the seed vinegar fermentation liquid containing acetic acid-producing bacteria in the step D may be different from the fermentation tank used for performing acetic acid fermentation in the step E by adding a fermentation nutrient source suitable for the vinegar to be produced. Note that, in a case where a fermentation tank different from the fermentation tank used for performing acetic acid fermentation by adding a fermentation nutrient source suitable for the vinegar to be produced in the step E is used, the method may include a step of transferring and distributing the seed vinegar fermentation liquid produced in the fermentation tank for the seed vinegar production step to a plurality of fermentation tanks for the fermentation step, and the fermentation step may be performed in each of the fermentation tanks for the fermentation step.

<Second Embodiment: Method for producing culture of acetic acid-producing bacteria>

The first embodiment relates to a method for producing vinegar, and vinegar can also be described as an aspect of a culture obtained by acetic acid-producing bacteria. That is, according to an aspect of the present disclosure, the present disclosure also encompasses an invention related to a method for producing a culture of acetic acid-producing bacteria. That is, the present embodiment encompasses the following inventions.

A method for producing a culture of acetic acid-producing bacteria, the method including a fermentation step using acetic acid-producing bacteria, in which all of the following fermentation conditions (a) to (c) are satisfied.

(a) A rate of increase in absorbance (660 nm) of the fermentation liquid from a time point at which a ratio of Brix to the total value of an acidity and an alcohol (ethanol) concentration of the fermentation liquid changes up to 3 hours after the time point is -0.2/h or more
(b) A rate of increase in ratio of the alcohol (ethanol) concentration to the total value of the acidity and the alcohol (ethanol) concentration of the fermentation liquid from a time point at which the ratio of Brix to the total value of the acidity and the alcohol (ethanol) concentration of the fermentation liquid changes up to 3 hours after the time point is -0.2/h or more
(c) When the fermentation step is defined as a period from a time point at which the ratio of Brix to the total value of the acidity and the alcohol (ethanol) concentration of the fermentation liquid changes to a time point at which aeration and/or stirring is continuously stopped for 15 minutes, an average alcohol (ethanol) concentration of the fermentation liquid in the entire fermentation step is 0.2 v/v% or more

Note that the second embodiment encompasses a method for producing a culture of acetic acid-producing bacteria, in which all the provisions relating to the method for producing vinegar disclosed in the first embodiment may be optionally adopted.

<Third Embodiment: Method for producing acetic acid-containing composition>

The first embodiment relates to a method for producing vinegar, and vinegar can also be described as an acetic acid-containing composition. That is, according to an aspect of the present disclosure, the present disclosure also encompasses an invention related to a method for producing an acetic acid-containing composition. That is, the present embodiment encompasses the following inventions.

A method for producing an acetic acid-containing composition, the method including a fermentation step using acetic acid-producing bacteria, in which all of the following fermentation conditions (a) to (c) are satisfied.

(a) A rate of increase in absorbance (660 nm) of the fermentation liquid from a time point at which a ratio of Brix to the total value of an acidity and an alcohol (ethanol) concentration of the fermentation liquid changes up to 3 hours after the time point is -0.2/h or more

(b) A rate of increase in ratio of the alcohol (ethanol) concentration to the total value of the acidity and the alcohol (ethanol) concentration of the fermentation liquid from a time point at which the ratio of Brix to the total value of the acidity and the alcohol (ethanol) concentration of the fermentation liquid changes up to 3 hours after the time point is -0.2/h or more

(c) When the fermentation step is defined as a period from a time point at which the ratio of Brix to the total value of the acidity and the alcohol (ethanol) concentration of the fermentation liquid changes to a time point at which aeration and/or stirring is continuously stopped for 15 minutes, an average alcohol (ethanol) concentration of the fermentation liquid in the entire fermentation step is 0.2 v/v% or more

Note that the third embodiment encompasses an aspect that may optionally adopt all the provisions relating to the method for producing vinegar disclosed in the first embodiment.

<Fourth Embodiment: Method for suppressing stuffy odor of vinegar>

According to the method for producing vinegar according to the first embodiment, it is possible to produce vinegar with suppressed stuffy odor. Therefore, the present disclosure encompasses the following inventions.

A method for suppressing a stuffy odor of vinegar, the method including a fermentation step using acetic acid-producing bacteria, in which fermentation is performed so that all of the following fermentation conditions (a) to (c) are satisfied.

(a) A rate of increase in absorbance (660 nm) of the fermentation liquid from a time point at which a ratio of Brix to the total value of an acidity and an alcohol (ethanol) concentration of the fermentation liquid changes up to 3 hours after the time point is -0.2/h or more

(b) A rate of increase in ratio of the alcohol (ethanol) concentration to the total value of the acidity and the alcohol (ethanol) concentration of the fermentation liquid from a time point at which the ratio of Brix to the total value of the acidity and the alcohol (ethanol) concentration of the fermentation liquid changes up to 3 hours after the time point is -0.2/h or more

(c) When the fermentation step is defined as a period from a time point at which the ratio of Brix to the total value of the acidity and the alcohol (ethanol) concentration of the fermentation liquid changes to a time point at which aeration and/or stirring is continuously stopped for 15 minutes, an average alcohol (ethanol) concentration of the fermentation liquid in the entire fermentation step is 0.2 v/v% or more

Note that the fourth embodiment encompasses an aspect that may optionally adopt all the provisions relating to the method for producing vinegar disclosed in the first embodiment.

<Fifth Embodiment: Method for controlling ratio of time from time point at which ratio of Brix to total value of acidity and alcohol (ethanol) concentration of fermentation liquid changes to time point at which bacterial growth rate of fermentation liquid becomes greater than average bacterial growth rate in entire fermentation step to 80% or less in entire fermentation step in vinegar production>

According to the method for producing vinegar described in the first embodiment, in vinegar production, the ratio of the time from the time point at which the ratio of Brix to the total value of the acidity and the alcohol (ethanol) concentration in the fermentation liquid changes to the time point at which the bacterial growth rate of the fermentation liquid becomes greater than the average bacterial growth rate in the entire fermentation step, can be controlled to 80% or less in the entire fermentation step in vinegar production. Therefore, the present disclosure encompasses the following inventions.

A method including a fermentation step using acetic acid-producing bacteria, in which fermentation is performed so that all of the following fermentation conditions (a) to (c) are satisfied, and in the entire fermentation step in vinegar production, a ratio of a time from a time point at which a ratio of Brix to the total value of an acidity and an alcohol (ethanol) concentration of a fermentation liquid changes to a time point at which a bacterial growth rate of the fermentation liquid becomes greater than an average bacterial growth rate in the entire fermentation step is 80% or less.

    (a) A rate of increase in absorbance (660 nm) of the fermentation liquid from a time point at which a ratio of Brix to the total value of an acidity and an alcohol (ethanol) concentration of the fermentation liquid changes up to 3 hours after the time point is -0.2/h or more

    (b) A rate of increase in ratio of the alcohol (ethanol) concentration to the total value of the acidity and the alcohol (ethanol) concentration of the fermentation liquid from a time point at which the ratio of Brix to the total value of the acidity and the alcohol (ethanol) concentration of the fermentation liquid changes up to 3 hours after the time point is -0.2/h or more

    (c) When the fermentation step is defined as a period from a time point at which the ratio of Brix to the total value of the acidity and the alcohol (ethanol) concentration of the fermentation liquid changes to a time point at which aeration and/or stirring is continuously stopped for 15 minutes, an average alcohol (ethanol) concentration of the fermentation liquid in the entire fermentation step is 0.2 v/v% or more

Note that the fifth embodiment encompasses an aspect that may optionally adopt all the provisions relating to the method for producing vinegar disclosed in the first embodiment. In addition, the range of the "ratio of the time from the time point at which the ratio of Brix to the total value of the acidity and the alcohol (ethanol) concentration of the fermentation liquid changes to the time point at which the bacterial growth rate of the fermentation liquid in the entire fermentation step becomes greater than the average bacterial growth rate in the entire fermentation step in production of vinegar" is not particularly limited, but can be, for example, in a range of 3% to 80% of the fermentation time in the entire fermentation step, and is preferably in a range of 4.5% to 75%, more preferably in a range of 6% to 70%, and still more preferably in a range of 6.5% to 68%. More specifically, an upper limit of the ratio of the time is 80% or less, and can be 79% or less, 78% or less, 75% or less, 74% or less, 72.5% or less, 72% or less, 70% or less, 69% or less, 68% or less, 67.5% or less, 67% or less, or 66.7% or less. On the other hand, a lower limit thereof is not particularly limited, and can be 3% or more, 3.5% or more, 4% or more, 4.5% or more, 5% or more, 5.5% or more, 6% or more, 6.5% or more, 7% or more, 7.2% or more, 7.3% or more, 7.4% or more, or 7.5% or more.

Example 1

Hereinafter, the present disclosure will be specifically described with reference to Examples, but the present disclosure is not limited to these Examples.

(1) Seed vinegar production step: Preparation of seed vinegar fermentation liquid (inoculum liquid)

The preparation of a seed vinegar fermentation liquid used in a fermentation step was performed as follows.

4.0 L of a fermentation nutrient source with a composition of 5.0 w/v% acidity, 3.0 v/v% alcohol (ethanol), 0.2 w/v% yeast extract (manufactured by ASAHI BREWERIES, LTD.), and 3.0 w/v% glucose was charged into a 10 L jar fermenter (manufactured by Mituwa Chemistry Co., Ltd.). A cryopreserved Acetobacter aceti IFO3281 strain was added to the fermentation nutrient source, and aeration and stirring were started to start seed vinegar fermentation. Note that the aeration rate was set to 0.1 vvm, the stirring speed was set to 500 rpm, and the temperature was set to 32.0°C. Then, in Tests 1 to 3, the fermentation liquid obtained at a stage where fermentation had progressed, the Brix reached 3°Bx, the acidity reached 6.5 w/v%, and the alcohol concentration reached about 1.0 v/v% was subjected to the following test as a seed vinegar fermentation liquid (inoculum liquid). In addition, seed vinegar fermentation liquids (inoculum liquids) of Test 5 and Test 6 in Table 1 were obtained by performing the same adjustment as described above, except that the acidity and alcohol concentration at the time of charging into the jar fermenter were adjusted (Test 5: acidity 5 w/v%, alcohol 5.5 v/v%; Test 6: acidity 3 w/v%, alcohol 2.5 v/v%). Note that the fermentation liquid refers to a liquid containing acetic acid-producing bacteria.

(2) Fermentation step

Fermentation was started by starting the addition of each fermentation nutrient source of Tests 1 to 3 and Tests 5 and 6 described in Table 1 to 3.0 L of the seed vinegar fermentation liquid prepared in the above (1), and each fermentation nutrient source was added so as to satisfy the requirements described in Table 2, thereby performing fermentation. The fermentation was continued even after 7.0 L of each fermentation nutrient source was added, and when the alcohol (ethanol) concentration finally reached 0.3 v/v%, aeration and stirring were continuously stopped for 15 minutes to end the fermentation. As described above, fermentation liquids of Examples 1 to 20, 81, and 82 and Comparative Examples 1 to 5 were obtained. Note that, in all of Examples 1 to 20, 81, and 82 and Comparative Examples 1 to 5, the seed vinegar fermentation liquid prepared in the seed vinegar fermentation step in the above (1) was used, the fermentation nutrient source of Test 1 in Table 1 was used in Examples 1 to 16 and Comparative Examples 1 to 4, the fermentation nutrient source of Test 2 in Table 1 was used in Examples 17 and 18, and the fermentation nutrient source of Test 3 in Table 1 was used in Examples 19 and 20 and Comparative Example 5. In addition, the fermentation nutrient source of Test 1 in Table 1 was used in Example 81, and the fermentation nutrient source of Test 3 in Table 1 was used in Example 82. Note that the fermentation nutrient sources were prepared by appropriately combining sugars (glucose, fructose, sucrose, lactose, or dextrose), yeast extract, protein hydrolysate, amino acids, vitamins, minerals, saccharified liquids from cereals (rice, wheat, or corn), sake lees extract, apple juice, acetic acid (brewed vinegar or synthetic acetic acid), water, and commercially available products.

Note that, when tests similar to each Example were conducted in each test group using Acetobacter pasteurianus IFO3283 strain, Gluconacetobacter swingsii NBRC 3261 strain, or Gluconacetobacter europaeus DSM6160 strain, instead of Acetobacter aceti IFO3281 strain, similar results were obtained.

[Table 1]

[Table 1]

| | | Acidity (w/v%) | Alcohol concentration (v/v%) | Total value of acidity and alcohol concentration | Brix (degrees) | Liquid volume (L) |
|---|---|---|---|---|---|---|
| Test 1 | Seed vinegar fermentation liquid (fermentation liquid) | 6.5 | 1 | 7.5 | 3 | 3 |
| | Fermentation nutrient source in fermentation step | 1 | 6.5 | 7.5 | 20 | 7 |
| Test 2 | Seed vinegar fermentation liquid (fermentation liquid) | 6.5 | 1 | 7.5 | 3 | 3 |
| | Fermentation nutrient source in fermentation step | 1 | 6.5 | 7.5 | 55 | 7 |
| Test 3 | Seed vinegar fermentation liquid (fermentation liquid) | 6.5 | 1 | 7.5 | 3 | 3 |
| | Fermentation nutrient source in fermentation step | 6 | 1.5 | 7.5 | 20 | 7 |
| Test 5 | Seed vinegar fermentation liquid (fermentation liquid) | 9.0 | 1 | 10.0 | 3 | 3 |
| | Fermentation nutrient source in fermentation step | 1 | 6.5 | 7.5 | 20 | 7 |
| Test 6 | Seed vinegar fermentation liquid (fermentation liquid) | 4.0 | 1 | 5.0 | 3 | 3 |
| | Fermentation nutrient source in fermentation step | 6 | 1.5 | 7.5 | 20 | 7 |

(3) Measurement of acidity

The acidity of the fermentation liquid was measured by the following method. A 5 mL sample (fermentation liquid) at 20°C was accurately collected using a whole pipette and diluted with ultrapure water to a total amount of about 50 mL. While stirring the diluted solution, a 0.5 mol/L aqueous sodium hydroxide solution was added dropwise with a burette, and the liquid volume at the point when the pH reached 8.2 was read to two decimal places. The acidity in terms of acetic acid was calculated according to the following formula. In the following formula, A is a titration amount (mol/L) of a 0.5 mol/L aqueous sodium hydroxide solution.

$$\text{Acidity in terms of acetic acid (w/v\%)} = A \times 0.060 \times 0.5/5 \times 100$$

(4) Method for analyzing alcohol (ethanol) concentration

The alcohol concentration of the fermentation liquid was measured by the following method.
The respective samples collected from the fermentation liquids of Examples 1 to 20 and Comparative Examples 1 to 5 were diluted with ultrapure water so that the ethanol concentration in each sample was around 0.05 to 0.20 v/v%. Subsequently, acetone (Sigma-Aldrich Japan G.K., purity 99.9% or higher, for internal standard) was added to the diluted sample at 0.25 v/v% to prepare a measurement sample. The alcohol concentration (ethanol concentration, v/v%) of each of the obtained measurement samples was measured under the following conditions using gas chromatography, and is shown in Table 1. Note that, regarding the alcohol concentration, the alcohol concentration (v/v%) was quantified by comparing the peak area of ethanol with the peak area of acetone as the internal standard.

· Measurement equipment: gas chromatograph (Model "GC-2014", manufactured by Shimadzu Corporation)
· Column: glass column 7G 3.2-2.1 (manufactured by Shimadzu Corporation), length: 2.1 m, inner diameter: 3.2 mm
· Detector: FID 150°C
· Temperature: held at 105°C (6.5 min) → raised at 20°C/min → post-run at 120°C (3 min)
· Flow rate: 40 mL/minute (carrier: nitrogen gas)
· Injection port temperature: 120°C, injection into glass insert having diameter of 3.2 mm
· Injection amount: 1 μL
· Measurement method: internal standard method

(5) Method for measuring Brix

Brix of the fermentation liquid was measured at 20°C using a refractometer (PR-101α (manufactured by ATAGO CO., LTD.)).

(6) Methods for measuring and calculating various measurement values

(i) Calculation of rate of increase in absorbance of fermentation liquid up to 3 hours after start of fermentation

The rate of increase in absorbance was calculated by the following method.
The time point at which each fermentation nutrient source listed in Table 1 was added to the seed vinegar fermentation liquid was defined as 0 hours, and the fermentation liquid was subsequently collected at 1 hour, 2 hours, and 3 hours thereafter (four samples in total). Next, the absorbance at a wavelength of 660 nm was measured at 20°C for each of the fermentation liquid samples and ultrapure water using a standard spectrophotometer (UV-1800, manufactured by Shimadzu Corporation) with a square cell having an optical path length of 10 mm. The absorbance of each fermentation liquid sample was determined by calculating the difference in absorbance between the fermentation liquid and ultrapure water (absorbance of fermentation liquid - absorbance of ultrapure water). Subsequently, the difference in absorbance between each of the fermentation liquid samples at 0 hours and 1 hour, the fermentation liquid samples at 1 hour and 2 hours, and the fermentation liquid samples at 2 hours and 3 hours ("the absorbance of the fermentation liquid sample at 1 hour - absorbance of the fermentation liquid sample at 0 hours", "the absorbance of the fermentation liquid sample at 2 hours - absorbance of the fermentation liquid sample at 1 hour", and "the absorbance of the fermentation liquid sample at 3 hours - absorbance of the fermentation liquid sample at 2 hours") was calculated, and the rate of increase in the absorbance was calculated at three points by dividing each by time. Note that the values at the three points were all -0.2/h or more. In addition, in Table 2, the arithmetic mean of the values at the three points was described as the rate of increase in absorbance up to 3 hours after the start of fermentation in (i) of Table 2.

(ii) Calculation of rate of increase in ratio of alcohol concentration to total value of acidity and alcohol concentration of fermentation liquid up to 3 hours after start of fermentation

The acidity and the alcohol concentration of the fermentation liquid samples (four samples in total) collected in the above (i) were measured in accordance with the methods for measuring the acidity and analyzing the alcohol (ethanol) concentration, and the ratio of the alcohol concentration v/v% to the total value of the acidity w/v% and the alcohol concentration v/v% (alcohol concentration v/v%/(acidity w/v% + alcohol concentration v/v%)) was determined for all four samples. Next, the difference in the ratio of the alcohol concentration to the total value of the acidity and the alcohol concentration of each of the fermentation liquid samples at 0 hours and 1 hour, the fermentation liquid samples at 1 hour and 2 hours, and the fermentation liquid samples at 2 hours and 3 hours ("the ratio of the alcohol concentration to the total value of the acidity and the alcohol concentration of the fermentation liquid sample at 1 hour - the ratio of the alcohol concentration to the total value of the acidity and the alcohol concentration of the fermentation liquid sample at 0 hours", "the ratio of the alcohol concentration to the total value of the acidity and the alcohol concentration of the fermentation liquid sample at 2 hours - the ratio of the alcohol concentration to the total value of the acidity and the alcohol concentration of the fermentation liquid sample at 1 hour", "the ratio of the alcohol concentration to the total value of the acidity and the alcohol concentration of the fermentation liquid sample at 3 hours - the ratio of the alcohol concentration to the total value of the acidity and the alcohol concentration of the fermentation liquid sample at 2 hours" was calculated, and the rate of increase in the ratio of the alcohol concentration to the total value of the acidity and the alcohol concentration was calculated at three points by dividing each by time. Note that the values at the three points were all -0.2/h or more. In addition, in Table 2, the arithmetic mean of the values at the three points is described as the value in (ii) of Table 2.

(iii) Method for calculating average alcohol concentration in entire fermentation step

The time point at which each fermentation nutrient source described in Table 1 was added to the seed vinegar fermentation liquid, that is, the point at which the ratio of Brix to the total value of the acidity and the alcohol concentration of the fermentation liquid changed (start of fermentation) was defined as 0 hours, and the alcohol concentration was measured every hour thereafter. The alcohol concentration was measured by the method described in the above (4), and the average alcohol concentration was calculated by determining the arithmetic mean of the obtained values.

(7) Method for calculating bacterial growth rate and average bacterial growth rate in entire fermentation step

The time point at which each fermentation nutrient source described in Table 1 was added to the seed vinegar fermentation liquid, that is, the point at which the ratio of Brix to the total value of the acidity and the alcohol concentration of the fermentation liquid changed (start of fermentation) was defined as 0 hours, and the absorbance and the liquid volume of the fermentation liquid were measured every hour thereafter. The absorbance of the fermentation liquid was measured by the method described in the above (6). Thereafter, the bacterial growth rate was calculated by dividing, by the time $t2 - t1$, the difference (change) between the value obtained by multiplying the absorbance $a_{t1}$ at $t1$ [h] from the start of fermentation and the liquid volume $L_{t1}$ [L], and the value obtained by multiplying the absorbance $a_{t2}$ at $t2$ [h] ($t2 = t1 + 1$) from the start of fermentation and the liquid volume $L_{t2}$ [L].

$$\text{Bacterial growth rate} = (a_{t2} \times L_{t2} - a_{t1} \times L_{t1})/(t2 - t1)$$

In addition, the average bacterial growth rate was calculated by determining the arithmetic mean of the bacterial growth rates calculated by the method.

(8) Methods for calculating various calculated values

(iv) Calculation method for time from time point at which ratio of Brix to total value of acidity and alcohol concentration of fermentation liquid changes (start of fermentation) to time point at which bacterial growth rate of fermentation liquid in entire fermentation step becomes greater than average bacterial growth rate in entire fermentation step

The time point at which each fermentation nutrient source described in Table 1 was added to the seed vinegar fermentation liquid, that is, the time point at which the ratio of Brix to the total value of the acidity and the alcohol concentration of the fermentation liquid changed (start of fermentation) was defined as 0 hours, and the time until the time point at which the bacterial growth rate calculated by the method described in (7) became greater than the average bacterial growth rate in the entire fermentation step calculated by the method described in (6) was determined, such that this time was determined as the time from the time point at which the ratio of Brix to the total value of the acidity and the alcohol concentration of the fermentation liquid changed (start of fermentation) to the time point at which the bacterial growth rate of the fermentation liquid became greater than the average bacterial growth rate in the entire fermentation step.

(v) Calculation method for ratio (ratio: %) of time from time point at which ratio of Brix to total value of acidity and alcohol concentration of fermentation liquid in entire fermentation step changes (start of fermentation) to time point at which bacterial growth rate of fermentation liquid becomes greater than average bacterial growth rate in entire fermentation step

The value obtained in the above (iv), that is, the time from the time point at which the ratio of Brix to the total value of the acidity and the alcohol concentration of the fermentation liquid calculated by the method described in the above (3) changed (start of fermentation) to the time point at which the bacterial growth rate of the fermentation liquid became greater than the average bacterial growth rate in the entire fermentation step was divided by the time during which the fermentation step was performed, that is, the time [h] from the time point at which the ratio of Brix to the total value of the acidity and the alcohol concentration of the fermentation liquid changed to the time point at which aeration and/or stirring was continuously stopped for 15 minutes. Thus, the ratio of the time from the time point at which the ratio of Brix to the total value of the acidity and the alcohol concentration of the fermentation liquid changed (start of fermentation) to the time point at which the bacterial growth rate of the fermentation liquid became greater than the average bacterial growth rate in the entire fermentation step was calculated.

(9) Sensory evaluation

Sensory evaluation was conducted on the vinegars obtained in Examples 1 to 20, Examples 81 and 82, and Comparative Examples 1 to 5, obtained as described above by the following procedure.

First, as sensory panelists for each sensory test, panelists were selected who had undergone prior training in identifying taste, texture, appearance, and other food characteristics, who demonstrated particularly excellent performance, who had experience in product development, who had extensive knowledge of the quality of food taste, texture, appearance, and the like, and who were capable of performing absolute evaluations for each sensory test item. Specifically, after conducting the following identification training (A) to (C), panelists who demonstrated particularly excellent performance, had extensive knowledge of food quality such as taste and texture, and were capable of performing absolute evaluations for each sensory test item were selected.

(A) A taste identification test in which one aqueous solution of each of the five tastes (sweetness: taste of sugar, sourness: taste of tartaric acid, umami: taste of monosodium glutamate, saltiness: taste of sodium chloride, bitterness: taste of caffeine) was prepared at a concentration close to the threshold of each component, and two additional samples of distilled water were added to obtain a total of seven samples, from which the sample corresponding to each taste was accurately identified.
(B) A concentration difference identification test in which differences in concentration were accurately identified among five each of sodium chloride aqueous solutions and acetic acid aqueous solutions having slightly different concentrations.
(C) A triangle test in which a soy sauce sample from manufacturer B was accurately identified from three samples consisting of two soy sauce samples from manufacturer A and one from manufacturer B.

Next, a sensory evaluation of stuffy odor was conducted by the ten selected panelists based on the evaluation criteria described below. Each item was evaluated through the selection of a single score by each panelist from the five-point scale shown below that was closest to their own assessment. The evaluation results were compiled by calculating the arithmetic mean of the scores from the ten panelists, with decimal fractions rounded to the nearest whole number. Note that all evaluations for each test group were conducted at a product temperature of 20°C.

1: A stuffy odor is perceived, and it is undesirable.
2: A slight stuffy odor is perceived, and it is somewhat undesirable.
3: A stuffy odor is hardly perceived, and it is somewhat desirable.
4: A stuffy odor is barely perceived, and it is desirable.
5: No stuffy odor is perceived, and it is highly desirable.

The following Table 2 (Table 2-1, Table 2-2, and Table 2-3) shows various measured values, calculated values, and results of sensory tests of the fermentation liquids in Examples and Comparative Examples. (i) to (v) in Table 2 indicate the following values.

(i) A rate of increase (/h) in absorbance (660 nm) of the fermentation liquid from a time point at which a ratio of Brix to the total value of an acidity and an alcohol concentration of the fermentation liquid changes up to 3 hours after the time point

(ii) A rate of increase (/h) in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point

(iii) When the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration (v/v%) of the fermentation liquid in the entire fermentation step

(iv) The time (hour: h) from the time point at which the ratio of Brix to the total value of the acidity and the alcohol concentration of the fermentation liquid changes to the time point at which the bacterial growth rate of the fermentation liquid becomes greater than the average bacterial growth rate of the fermentation liquid in the entire fermentation step

(v) Ratio (ratio: %) of the time from the time point at which the ratio of Brix to the total value of the acidity and the alcohol concentration of the fermentation liquid in the entire fermentation step changes to the time point at which the bacterial growth rate of the fermentation liquid becomes greater than average bacterial growth rate in the entire fermentation step

Here, Examples 1 to 20 and Examples 81 and 82 are examples in which the measured values (i) to (iii) satisfy the fermentation conditions (a) to (c). On the other hand, Comparative Examples 1 to 5 are examples in which the measured values (i) to (iii) do not satisfy at least one of the fermentation conditions (a) to (c).

[Table 2]

[Table 2-1]

| | | Test 1 | | | | | | | |
|---|---|---|---|---|---|---|---|---|---|
| | | Example 1 | Example 2 | Example 3 | Example 4 | Example 5 | Example 6 | Example 7 | Example 8 |
| Measured value | (i)/h | -0.015 | -0.018 | -0.023 | -0.025 | -0.050 | -0.100 | -0.150 | -0.200 |
| | (ii)/h | -0.050 | -0.100 | -0.150 | -0.200 | 0.050 | 0.100 | 0.150 | 0.200 |
| | (iii)v/v% | 0.30 | 0.70 | 0.90 | 1.00 | 1.20 | 1.20 | 1.80 | 2.00 |
| Calculated value | (iv)/h | 54 | 54 | 54 | 54 | 54 | 54 | 54 | 58 |
| | (v)% | 67.5 | 67.5 | 67.5 | 67.5 | 67.5 | 67.5 | 67.5 | 72.5 |
| Fermentation result | Fermentation time h | 80 | 80 | 80 | 80 | 80 | 80 | 80 | 80 |
| Sensory evaluation | Stuffy odor | 4 | 4 | 4 | 3 | 5 | 5 | 5 | 4 |
| Measured value | (vi)h | 2.5 | 3 | 3.5 | 4 | 1 | 1.5 | 2 | 2 |
| | (vii)h | 2.5 | 3 | 3.5 | 4 | 1 | 1.5 | 2 | 2 |
| Sensory evaluation | Rich aroma | 2 | 2 | 2 | 2 | 2 | 2 | 2 | 2 |

EP 4 674 940 A1

29

[Table 2-2]

| | | Test 1 | | | | | | | |
|---|---|---|---|---|---|---|---|---|---|
| | | Example 9 | Example 10 | Example 11 | Example 12 | Example 13 | Example 14 | Example 15 | Example 16 |
| Measured value | (i)/h | -0.020 | -0.200 | -0.005 | 0.000 | 0.100 | -0.020 | -0.020 | -0.020 |
| | (ii)/h | 0.080 | 0.300 | 0.010 | 0.000 | 0.080 | 0.080 | 0.080 | 0.080 |
| | (iii)v/v% | 1.20 | 0.20 | 0.40 | 0.50 | 0.60 | 1.20 | 1.20 | 1.20 |
| Calculated value | (iv)/h | 50 | 60 | 50 | 60 | 50 | 50 | 50 | 50 |
| | (v)% | 66.7 | 75.0 | 66.7 | 80.0 | 66.7 | 66.7 | 66.7 | 66.7 |
| Fermentation result | Fermentation time h | 75 | 80 | 75 | 75 | 75 | 75 | 75 | 75 |
| Sensory evaluation | Stuffy odor | 5 | 3 | 5 | 5 | 5 | 5 | 5 | 5 |
| Measured value | (vi)h | 1 | 3 | 0.5 | 0.5 | 0 | 6 | 5 | 6.5 |
| | (vii)h | 1 | 3 | 0.5 | 0.5 | 0 | 6 | 7 | 8 |
| Sensory evaluation | Rich aroma | 2 | 2 | 2 | 2 | 2 | 0 | 1 | 0 |

[Table 2-3]

| | | Test 1 | | | | Test 2 | | Test 3 | | | Test 5 | Test 6 |
|---|---|---|---|---|---|---|---|---|---|---|---|---|
| | | Comparative Example 1 | Comparative Example 2 | Comparative Example 3 | Comparative Example 4 | Example 17 | Example 12 | Example 19 | Example 20 | Comparative Example 5 | Example 81 | Example 82 |
| Measured value | (i)/h | -0.030 | 0.000 | -0.300 | -0.050 | -0.02 | -0.02 | -0.02 | -0.02 | -0.02 | -0.10 | -0.02 |
| | (ii)/h | -0.030 | 0.000 | 0.050 | -0.250 | 0.08 | 0.08 | 0.08 | 0.08 | 0.09 | 0.10 | 0.08 |
| | (iii)v/v% | 1.20 | 0.18 | 1.50 | 0.30 | 1.20 | 1.20 | 1.20 | 1.20 | 0.19 | 1.20 | 1.20 |
| Calculated value | (iv)/h | 54 | 50 | 110 | 54 | 54 | 54 | 1 | 1 | 2 | 54 | 1 |
| | (v)% | 67.5 | 66.7 | 84.6 | 67.5 | 67.5 | 67.5 | 7.5 | 7.5 | 7.5 | 67.5 | 7.5 |
| Fermentation result | Fermentation time h | 80 | 75 | 130 | 80 | 80 | 80 | 16 | 16 | 16 | 80 | 16 |
| Sensory evaluation | Stuffy odor | 2 | 2 | 2 | 2 | 5 | 5 | 5 | 5 | 2 | 5 | 5 |
| Measured value | (vi)h | 6.5 | 7 | 10 | 4.5 | 1 | 5.5 | 2.5 | 6 | 5.5 | 1.5 | 2.5 |
| | (vii)h | 6.5 | 7 | 10 | 4.5 | 1 | 7 | 2.5 | 6.5 | 5.5 | 1.5 | 2.5 |
| Sensory evaluation | Rich aroma | 0 | 0 | 0 | 1 | 2 | 0 | 2 | 0 | 0 | 2 | 2 |

As is apparent from Table 2, Examples 1 to 20 and Examples 81 and 82, in which the measured values (i) to (iii) satisfy all of the fermentation conditions (a) to (c), showed no effect on acetic acid-producing bacteria due to the addition of the fermentation nutrient sources (such as cessation of acetic acid production or a rapid increase in acetic acid production), resulting in easy fermentation control and a favorable outcome with little to no perception of stuffy odor. In addition, in Examples 1 to 20 and Examples 81 and 82, the time from the time point at which the Brix ratio to the total value of the acidity and the alcohol concentration in the fermentation liquid of (iv) changed to the time point at which the bacterial growth rate became greater than the average bacterial growth rate in the entire fermentation step was within 80 hours, and the time ratio in (v) was 80% or less, indicating that the level of acetic acid production was properly maintained, and as a result, the fermentation time was shortened. On the other hand, in Comparative Example 3, the time in (iv) was 110 hours and the ratio in (v) was 84.6%, indicating that the addition of the fermentation nutrient source had an effect on the acetic acid-producing bacteria (a decrease in acetic acid production), and as a result, the fermentation time was prolonged. In addition, in Comparative Examples 1, 2, 4, and 5, the measured value (ii) or (iii) did not satisfy the fermentation condition (b) or (c), resulting in the perception of a stuffy odor.

From this result, it was found that, by satisfying all of the fermentation conditions (a) to (c) in the method for producing vinegar, in vinegar production, fermentation management becomes easier and vinegar in which the occurrence of a stuffy odor is suppressed can be obtained. In addition, it was found that, in the method for producing vinegar, the fermentation time can be shortened by satisfying the condition that the time in (iv) is within 80 hours and the ratio of the time in (v) is 80% or less.

In addition, for Examples 1 to 20, Examples 81 and 82, and Comparative Examples 1 to 5, the following (vi) to (vii) were calculated, and the results are shown in Table 2.

(vi) In the fermentation step after 50% of the fermentation time in the entire fermentation step has elapsed, the time (h) during which the ratio of the alcohol concentration to the total value of the acidity and the alcohol concentration of the fermentation liquid is 0.04 or less

(vii) In the fermentation step after 50% of the fermentation time in the entire fermentation step has elapsed, the time (h) during which the ratio of the alcohol concentration to the total value of the acidity and the alcohol concentration of the fermentation liquid is 0.04 or less and the alcohol concentration of the fermentation liquid is less than 0.2 v/v%

(vi) Calculation method of time (h) during which ratio of alcohol concentration to total value of acidity and alcohol concentration of fermentation liquid is 0.04 or less in fermentation step after 50% of fermentation time in entire fermentation step has elapsed

The time point at which 50% of the fermentation time in the entire fermentation step had elapsed was set as 0 hours, and thereafter, the acidity and the alcohol concentration of the fermentation liquid were measured every 0.5 hours. The acidity of the fermentation liquid was measured by the method described in the above (3), and the alcohol concentration of the fermentation liquid was measured by the method described in the above (4), and at each time point, the ratio of the alcohol concentration v/v% to the total value of the acidity w/v% and the alcohol concentration v/v% (alcohol concentration v/v%/(acidity w/v% + alcohol concentration v/v%)) was determined. Thereafter, the total time during which the ratio of the alcohol concentration to the total value of the acidity and the alcohol concentration of the fermentation liquid, calculated by the above method, was 0.04 or less was determined, thereby calculating the time (h) during which the ratio of the alcohol concentration to the total value of the acidity and the alcohol concentration of the fermentation liquid was 0.04 or less in the fermentation step after 50% of the fermentation time in the entire fermentation step had elapsed.

(vii) Calculation method of time (h) during which ratio of alcohol concentration to total value of acidity and alcohol concentration of fermentation liquid is 0.04 or less and alcohol concentration of fermentation liquid is less than 0.2 v/v% in fermentation step after 50% of fermentation time in entire fermentation step has elapsed

The time point at which 50% of the fermentation time in the entire fermentation step had elapsed was set as 0 hours, and thereafter, the acidity and the alcohol concentration of the fermentation liquid were measured every 0.5 hours. The acidity of the fermentation liquid was measured by the method described in the above (3), and the alcohol concentration of the fermentation liquid was measured by the method described in the above (4), and at each time point, the ratio of the alcohol concentration v/v% to the total value of the acidity w/v% and the alcohol concentration v/v% (alcohol concentration v/v%/(acidity w/v% + alcohol concentration v/v%)) was determined. Thereafter, the total time during which the ratio of the alcohol concentration to the total value of the acidity and the alcohol concentration of the fermentation liquid, calculated by the above method, was 0.04 or less and the alcohol concentration of the fermentation liquid was less than 0.2 v/v% was determined, thereby calculating the time (h) during which the ratio of the alcohol concentration to the total value of the acidity and the alcohol concentration of the fermentation liquid was 0.04 or less and the alcohol concentration of the fermentation liquid was less than 0.2 v/v% in the fermentation step after 50% of the fermentation time in the entire fermentation step had elapsed.

In addition, in Examples 1 to 20, Examples 81 and 82, and Comparative Examples 1 to 5, as a sensory test, a sensory evaluation was conducted not only for stuffy odor but also for rich aroma, based on the evaluation criteria described below. The results are shown in Table 2.

0: No remarkable aroma is perceived.
1: A rich aroma is perceived.
2: A rich aroma is strongly perceived.

From the results shown in Table 2, it was found that in the method for producing vinegar, setting the value of (vi) or (vii) to within 5 hours enables the production of vinegar having a rich aroma.

In addition, in Test 4, a sensory evaluation was conducted for pungent odor using the following evaluation criteria, in the cases where the aeration rate was increased by 0.1 vvm, 0.2 vvm, or 1.0 vvm before the time point at which the ratio of Brix to the total value of the acidity and the alcohol concentration changed, in comparison with the time point at which the ratio of Brix to the total value of the acidity and the alcohol concentration of the fermentation liquid changed. Note that the aeration rate was increased 20 minutes before the time point at which the ratio of Brix to the total value of the acidity and the alcohol concentration changed (start of fermentation), and after maintaining the increased aeration for 1 minute, it was returned to the aeration rate at the start of fermentation. Except for the aeration rate before the time point at which the ratio of Brix to the total value of the acidity and the alcohol concentration changed, fermentation in Examples 21 to 23 was performed under the same conditions as in Example 1; fermentation in Examples 24 to 26 was performed under the same conditions as in Example 2; fermentation in Examples 27 to 29 was performed under the same conditions as in Example 3; fermentation in Examples 30 to 32 was performed under the same conditions as in Example 4; fermentation in Examples 33 to 35 was performed under the same conditions as in Example 5; fermentation in Examples 36 to 38 was performed under the same conditions as in Example 6; fermentation in Examples 39 to 41 was performed under the same conditions as in Example 7; fermentation in Examples 42 to 44 was performed under the same conditions as in Example 8; fermentation in Examples 45 to 47 was performed under the same conditions as in Example 9; fermentation in Examples 48 to 50 was performed under the same conditions as in Example 10; fermentation in Examples 51 to 53 was performed under the same conditions as in Example 11; fermentation in Examples 54 to 56 was performed under the same conditions as in Example 12; fermentation in Examples 57 to 59 was performed under the same conditions as in Example 13; fermentation in Examples 60 to 62 was performed under the same conditions as in Example 14; fermentation in Examples 63 to 65 was performed under the same conditions as in Example 15; fermentation in Examples 66 to 68 was performed under the same conditions as in Example 16; fermentation in Examples 69 to 71 was performed under the same conditions as in Example 17; fermentation in Examples 72 to 74 was performed under the same conditions as in Example 18; fermentation in Examples 75 to 77 was performed under the same conditions as in Example 19; and fermentation in Examples 78 to 80 was performed under the same conditions as in Example 20. As controls for each Example, cases in which the aeration rate before the time point at which the ratio of Brix to the total value of the acidity and the alcohol concentration changed was the same as that at the time point at which the ratio of Brix to the total value of the acidity and the alcohol concentration of the fermentation liquid changed were used. In Table 3, for ease of understanding, the numbers of the control Examples corresponding to each Example are shown as a reference.

In addition, the aeration rate was increased 20 minutes before the time point at which the ratio of Brix to the total value of the acidity and the alcohol concentration changed (start of fermentation), and thereafter, even in the case where the increased aeration was maintained until the start of fermentation (for 20 minutes), and then the aeration rate was returned to that at the start of fermentation, similar results were obtained. Furthermore, similar results were obtained even when the time during which the increased aeration was maintained was changed from 20 minutes to 10 minutes, 5 minutes, and 0.5 minutes.

Note that, in the fermentation tank for fermenting the seed vinegar fermentation liquid, the same results were obtained in the case of using a fermentation tank different from the fermentation tank for performing acetic acid fermentation by adding a fermentation nutrient source to the seed vinegar fermentation liquid, and in the case of using the same fermentation tank.

0: A pungent odor comparable to that of the control is present.
1: The pungent odor is suppressed compared to the control.
2: The pungent odor is significantly suppressed compared to the control.

The evaluation results are shown in the following Table 3 (Table 3-1, Table 3-2, Table 3-3, and Table 3-4). Note that, (viii) in Table 3 indicates the following values. This value is preferably 0.1 vvm or more.

(viii) Aeration rate (vvm) increased compared to time point at which ratio of Brix to total value of acidity and alcohol concentration of fermentation liquid changes before time point at which ratio of Brix to total value of acidity and alcohol concentration of fermentation liquid changes

[Table 3]

[Table 3]

[Table 3-1]

|  | Example 21 | Example 22 | Example 23 | Example 24 | Example 25 | Example 26 | Example 27 | Example 28 | Example 29 | Example 30 | Example 31 | Example 32 | Example 33 | Example 34 | Example 35 |
|---|---|---|---|---|---|---|---|---|---|---|---|---|---|---|---|
| Reference | Example 1 | | | Example 2 | | | Example 3 | | | Example 4 | | | Example 5 | | |
| (viii)vvm | 0.1 | 0.2 | 1 | 0.1 | 0.2 | 1 | 0.1 | 0.2 | 1 | 0.1 | 0.2 | 1 | 0.1 | 0.2 | 1 |
| Sensory evaluation | 1 | 1 | 2 | 1 | 1 | 2 | 1 | 1 | 2 | 0 | 1 | 2 | 1 | 2 | 2 |

EP 4 674 940 A1

[Table 3-2]

| | Example 36 | Example 37 | Example 38 | Example 39 | Example 40 | Example 41 | Example 42 | Example 43 | Example 44 | Example 45 | Example 46 | Example 47 | Example 48 | Example 49 | Example 50 |
|---|---|---|---|---|---|---|---|---|---|---|---|---|---|---|---|
| Reference | Example 6 | | | Example 7 | | | Example 8 | | | Example 9 | | | Example 10 | | |
| (viii)vvm | 0.1 | 0.2 | 1 | 0.1 | 0.2 | 1 | 0.1 | 0.2 | 1 | 0.1 | 0.2 | 1 | 0.1 | 0.2 | 1 |
| Sensory evaluation | 1 | 2 | 2 | 1 | 2 | 2 | 1 | 1 | 2 | 1 | 2 | 2 | 0 | 1 | 2 |

[Table 3-3]

| | Example 51 | Example 52 | Example 53 | Example 54 | Example 55 | Example 56 | Example 57 | Example 58 | Example 59 | Example 60 | Example 61 | Example 62 | Example 63 | Example 64 | Example 65 |
|---|---|---|---|---|---|---|---|---|---|---|---|---|---|---|---|
| Reference | Example 11 | | | Example 12 | | | Example 13 | | | Example 14 | | | Example 15 | | |
| (viii)vvm | 0.1 | 0.2 | 1 | 0.1 | 0.2 | 1 | 0.1 | 0.2 | 1 | 0.1 | 0.2 | 1 | 0.1 | 0.2 | 1 |
| Sensory evaluation | 1 | 2 | 2 | 1 | 2 | 2 | 1 | 2 | 2 | 1 | 2 | 2 | 1 | 2 | 2 |

[Table 3-4]

| | Example 66 | Example 67 | Example 68 | Example 69 | Example 70 | Example 71 | Example 72 | Example 73 | Example 74 | Example 75 | Example 76 | Example 77 | Example 78 | Example 79 | Example 80 |
|---|---|---|---|---|---|---|---|---|---|---|---|---|---|---|---|
| Reference | Example 16 | | | Example 17 | | | Example 18 | | | Example 19 | | | Example 20 | | |
| (viii)vvm | 0.1 | 0.2 | 1 | 0.1 | 0.2 | 1 | 0.1 | 0.2 | 1 | 0.1 | 0.2 | 1 | 0.1 | 0.2 | 1 |
| Sensory evaluation | 1 | 2 | 2 | 1 | 2 | 2 | 1 | 2 | 2 | 1 | 2 | 2 | 1 | 2 | 2 |

From the results shown in Table 3, it was found that, in the method for producing vinegar, vinegar in which a pungent odor is suppressed can be produced by increasing the aeration rate by 0.1 vvm or more before the time point at which the ratio of Brix to the total value of the acidity and the alcohol concentration of the fermentation liquid changes, as compared with the aeration rate at the time point at which the ratio of Brix to the total value of the acidity and the alcohol concentration of the fermentation liquid changes.

Although the embodiments and Examples of the present disclosure have been described in detail, the specific configuration is not limited to these embodiments and Examples, and a design change that does not depart from the gist of the present disclosure is included in the present disclosure.

Cross-Reference to Related Application

The present application claims priority based on Japanese Patent Application No. 2023-030392, filed on February 28, 2023, in the Japan Patent Office, the disclosure of which is incorporated herein by reference in its entirety.

**Claims**

1. A method for producing vinegar, the method comprising a fermentation step using acetic acid-producing bacteria, wherein all of the following fermentation conditions (a) to (c) are satisfied:

   (a) a rate of increase in absorbance (660 nm) of a fermentation liquid from a time point at which a ratio of Brix to the total value of an acidity and an alcohol concentration of the fermentation liquid changes up to 3 hours after the time point is -0.2h/or more;
   (b) a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more; and
   (c) when the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more.

2. The method for producing vinegar according to claim 1, wherein in the fermentation step after 50% of a fermentation time in the entire fermentation step has elapsed, a time during which the ratio of the alcohol concentration to the total value of the acidity and the alcohol concentration of the fermentation liquid is 0.04 or less is within 5 hours.

3. The method for producing vinegar according to claim 1 or 2, wherein in the fermentation step after 50% of a fermentation time in the entire fermentation step has elapsed, a time during which the ratio of the alcohol concentration to the total value of the acidity and the alcohol concentration of the fermentation liquid is 0.04 or less and the alcohol concentration of the fermentation liquid is less than 0.2 v/v% is within 5 hours.

4. The method for producing vinegar according to any one of claims 1 to 3, comprising a step of increasing an aeration rate by 0.1 vvm or more as compared with the time point at which the ratio of Brix to the total value of the acidity and the alcohol concentration of the fermentation liquid changes before the time point at which the ratio of Brix to the total value of the acidity and the alcohol concentration of the fermentation liquid changes.

5. The method for producing vinegar according to any one of claims 1 to 4, wherein a time during which the alcohol concentration of the fermentation liquid is less than 0.2 v/v% is within 5 hours in the entire fermentation step.

6. The method for producing vinegar according to any one of claims 1 to 5, wherein a time during which the alcohol concentration of the fermentation liquid is less than 0.2 v/v% is 30% or less of a fermentation time in the entire fermentation step.

7. The method for producing vinegar according to any one of claims 1 to 6, wherein a fermentation tank for fermenting a seed vinegar fermentation liquid containing acetic acid-producing bacteria is different from a fermentation tank for performing acetic acid fermentation by adding a fermentation nutrient source suitable for the vinegar to be produced to the seed vinegar fermentation liquid.

8. The method for producing vinegar according to any one of claims 1 to 7, wherein a rate of increase in ratio of Brix to the alcohol concentration of the fermentation liquid is 100/h or less.

9. The method for producing vinegar according to any one of claims 1 to 8, wherein in the fermentation step after 50% of a fermentation time in the entire fermentation step has elapsed, a time during which a ratio of Brix to the alcohol concentration is 40 or more is within 5 hours.

10. The method for producing vinegar according to any one of claims 1 to 9, wherein a time from the time point at which the ratio of Brix to the total value of the acidity and the alcohol concentration of the fermentation liquid changes to a time point at which a bacterial growth rate of the fermentation liquid becomes greater than an average bacterial growth rate in the entire fermentation step is within 80 hours.

11. The method for producing vinegar according to any one of claims 1 to 10, wherein in the entire fermentation step, a ratio of a time from the time point at which the ratio of Brix to the total value of the acidity and the alcohol concentration of the fermentation liquid changes to a time point at which a bacterial growth rate of the fermentation liquid becomes greater than an average bacterial growth rate in the entire fermentation step is 80% or less.

12. The method for producing vinegar according to any one of claims 1 to 11, wherein the alcohol is ethanol.

13. The method for producing vinegar according to any one of claims 1 to 12, wherein the acetic acid-producing bacteria are one or more acetic acid bacteria selected from the group consisting of acetic acid bacteria of the genus Acetobacter, acetic acid bacteria of the genus Gluconacetobacter, acetic acid bacteria of the genus Gluconobacter, acetic acid bacteria of the genus Komagataeibacter, acetic acid bacteria of the genus Kozakia, and acetic acid bacteria of the genus Tanticharoenia.

14. The method for producing vinegar according to any one of claims 1 to 13, wherein acetic acid-producing bacteria other than Acetobacter aceti IFO3281 strain are used as the acetic acid-producing bacteria.

15. The method for producing vinegar according to any one of claims 1 to 14, wherein the time point at which the ratio of Brix to the total value of the acidity and the alcohol concentration of the fermentation liquid changes is a time point at which addition of a fermentation nutrient source to a seed vinegar fermentation liquid is started.

16. The method for producing vinegar according to any one of claims 1 to 15, wherein an acidity of the seed vinegar fermentation liquid is 1.0 w/v% or more and 12 w/v% or less.

17. The method for producing vinegar according to claim 15 or 16, wherein the seed vinegar fermentation liquid is prepared by a seed vinegar fermentation step performed by adding a fermentation nutrient source to acetic acid-producing bacteria, and performing aeration and/or stirring, and the seed vinegar fermentation step includes a step of increasing an acidity of the seed vinegar fermentation liquid to 13 w/v% or more.

18. A method for producing a culture of acetic acid-producing bacteria, the method comprising a fermentation step using acetic acid-producing bacteria, wherein all of the following fermentation conditions (a) to (c) are satisfied:

   (a) a rate of increase in absorbance (660 nm) of a fermentation liquid from a time point at which a ratio of Brix to the total value of an acidity and an alcohol concentration of the fermentation liquid changes up to 3 hours after the time point is -0.2h/or more;
   (b) a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more; and
   (c) when the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more.

19. A method for producing an acetic acid-containing composition, the method comprising a fermentation step using acetic acid-producing bacteria, wherein all of the following fermentation conditions (a) to (c) are satisfied:

(a) a rate of increase in absorbance (660 nm) of a fermentation liquid from a time point at which a ratio of Brix to the total value of an acidity and an alcohol concentration of the fermentation liquid changes up to 3 hours after the time point is -0.2h/or more;

(b) a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more; and

(c) when the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more.

20. A method for producing vinegar by performing fermentation while performing aeration and/or stirring, the method comprising at least the following steps:

(Step D) a step of preparing a seed vinegar fermentation liquid;

(Step E) a step of starting a fermentation step by starting addition of a fermentation nutrient source to the seed vinegar fermentation liquid to change a ratio of Brix to the total value of an acidity and an alcohol concentration of the fermentation liquid;

(Step F) a step of performing acetic acid fermentation by aeration and/or stirring until the acidity of the fermentation liquid reaches a predetermined value; and

(Step G) a step of terminating the fermentation by continuously stopping the aeration and/or stirring for 15 minutes or longer at a stage where the acidity of the fermentation liquid becomes equal to or greater than a predetermined value,

wherein from the step E to the step F, a rate of increase in an absorbance (660 nm) of the fermentation liquid from a time point at which a ratio of Brix to the total value of an acidity and an alcohol concentration of the fermentation liquid changes up to 3 hours after the time point is - 0.2/h or more, from the step E to the step F, a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more, and when the fermentation step is defined as a period from a time point at which the ratio of Brix to the total value of the acidity and the alcohol concentration of the fermentation liquid changes in the step E to a time point at which aeration and/or stirring is continuously stopped for 15 minutes in the step G, an average alcohol concentration of the fermentation liquid is 0.2 v/v% or more.

21. A method for producing a beverage or a seasoning, the method comprising a step of blending vinegar produced by the method according to any one of claims 1 to 20.

22. A method for suppressing a stuffy odor of vinegar, the method comprising a fermentation step using acetic acid-producing bacteria, wherein fermentation is performed so that all of the following fermentation conditions (a) to (c) are satisfied:

(a) a rate of increase in absorbance (660 nm) of a fermentation liquid from a time point at which a ratio of Brix to the total value of an acidity and an alcohol concentration of the fermentation liquid changes up to 3 hours after the time point is -0.2h/or more;

(b) a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more; and

(c) when the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more.

23. A method for controlling a ratio of a time from a time point at which a ratio of Brix to a total value of an acidity and an alcohol concentration of a fermentation liquid changes to a time point at which a bacterial growth rate of the fermentation liquid becomes greater than an average bacterial growth rate in the entire fermentation step to 80% or less in the entire fermentation step in vinegar production, the method comprising a fermentation step using acetic acid-producing bacteria, wherein fermentation is performed so that all of the following fermentation conditions (a) to (c) are satisfied:

(a) a rate of increase in absorbance (660 nm) of a fermentation liquid from a time point at which a ratio of Brix to the total value of an acidity and an alcohol concentration of the fermentation liquid changes up to 3 hours after the time point is -0.2h/or more;

(b) a rate of increase in ratio of the alcohol concentration to the total value of the acidity and the alcohol concentration of the fermentation liquid from a time point at which the ratio of Brix to the total value of the acidity and the alcohol concentration of the fermentation liquid changes up to 3 hours after the time point is -0.2/h or more; and

(c) when the fermentation step is defined as a period from a time point at which the ratio of Brix to the total value of the acidity and the alcohol concentration of the fermentation liquid changes to a time point at which aeration and/or stirring is continuously stopped for 15 minutes, an average alcohol concentration of the fermentation liquid in the entire fermentation step is 0.2 v/v% or more.

## INTERNATIONAL SEARCH REPORT

| | International application No. |
|---|---|
| | **PCT/JP2024/006743** |

**A. CLASSIFICATION OF SUBJECT MATTER**

***C12J 1/04***(2006.01)i
FI:  C12J1/04 103Z; C12J1/04 102; C12J1/04 103A

According to International Patent Classification (IPC) or to both national classification and IPC

**B. FIELDS SEARCHED**

Minimum documentation searched (classification system followed by classification symbols)

C12J1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 11-18750 A (NIHON-SHINKO CO., LTD.) 26 January 1999 (1999-01-26) claims, example 2, fig. 2 | 1-3, 5-6, 8-14, 16, 18-19, 21-23 |
| X | JP 6-113813 A (NAKANO VINEGAR CO., LTD.) 26 April 1994 (1994-04-26) claims, paragraph [0008], examples | 1-3, 5-23 |
| Y | | 4-17, 21 |
| Y | JP 49-102898 A (NAKANO VINEGAR CO., LTD.) 28 September 1974 (1974-09-28) example 1 | 4-17, 21 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/006743**

| Patent document cited in search report | | | Publication date (day/month/year) | Patent family member(s) | Publication date (day/month/year) |
|---|---|---|---|---|---|
| JP | 11-18750 | A | 26 January 1999 | (Family: none) | |
| JP | 6-113813 | A | 26 April 1994 | (Family: none) | |
| JP | 49-102898 | A | 28 September 1974 | (Family: none) | |

Form PCT/ISA/210 (patent family annex) (July 2022)

**REFERENCES CITED IN THE DESCRIPTION**

**Patent documents cited in the description**

- JP 4059874 A

- JP 2023030392 A

**Non-patent literature cited in the description**

- Quality Labeling Standard for Vinegar. *Ministry of Agriculture, Forestry and Fisheries Notification*, 16 October 2008 (1507)
- *CHEMICAL ABSTRACTS*, 64-17-5

- Japanese Agricultural Standard for brewed vinegar. *Ministry of Agriculture, Forestry and Fisheries Notification*, 13 December 2019 (1626)